# EUROPEAN PATENT APPLICATION

(11) **EP 4 636 466 A1**
(43) Date of publication of application: **22.10.2025**
(21) Application number: 23903447.3
(22) Date of filing: 08.12.2023
(51) Int. Cl.: G02C 7/10, C08F 2/44, C08F 220/26, C08F 290/06, C08F 299/02, C09K 9/02, G02B 1/04

(54) **CURABLE COMPOSITION, CURED BODY, LAMINATE, LENS, AND SPECTACLES**

(30) Priority: 16.12.2022 JP 2022201648
(71) Applicant: TOKUYAMA CORPORATION, Yamaguchi 745-8648 (JP)
(72) Inventor: HATTORI Yuki, Shunan-shi, Yamaguchi 745-8648 (JP); HIRAREN Toshimitsu, Shunan-shi, Yamaguchi 745-8648 (JP); MIYAZAKI Masayuki, Shunan-shi, Yamaguchi 745-8648 (JP)
(74) Representative: Papula Oy
(86) International application number: PCT/JP2023/044058
(87) International publication number: WO 2024/128160

(57) **Abstract**

The purpose of the present invention is to provide: a curable composition that makes it possible to provide a cured body exhibiting excellent functional dye performance; a cured body; a laminate; a lens; and spectacles. One embodiment of the present invention provides a curable composition. The curable composition contains a first radically polymerizable monomer represented by formula (1) and a functional dye. The content of the first radically polymerizable monomer is at least 15 mass%. Another embodiment provides a cured body. The cured body is obtained by curing the curable composition according to the one embodiment.

## Description

### TECHNICAL FIELD

The present invention relates to a curable composition, a cured product, a laminate, a lens, and eyeglasses.

### BACKGROUND ART

A photochromic compound represented by a naphthopyran compound, a fulgide compound, a spirooxazine compound, or the like is a compound that can undergo a reversible transformation between two isomers with different absorption spectra upon irradiation with light including ultraviolet light such as sunlight or light from a mercury lamp. In general, when a photochromic compound in a colorless decolored state is irradiated with ultraviolet rays, it rapidly changes in color: it undergoes isomerization (color development reaction) to a colored color-developed state and returns to the original color when the irradiation of light is stopped and the compound is placed in a dark place (hereinafter, also referred to as photochromic property). Such a compound is used for various applications, particularly for optical materials, by utilizing this characteristic.

For example, photochromic eyeglass lenses that have a photochromic property due to use of a photochromic compound rapidly become colored outdoors, where light including ultraviolet rays such as sunlight is radiated, and function as sunglasses; the color of the photochromic eyeglass lenses fades indoors, where such light is not radiated, and the photochromic eyeglass lenses function as transparent ordinary eyeglasses. Demand for such photochromic eyeglass lenses has been increasing in recent years.

The following means (A) to (C) are known as specific methods for imparting a photochromic property to an optical material.

(A) A method of mixing a photochromic compound with a polymerizable monomer and polymerizing a resultant mixture to directly mold an optical material such as a lens.
(B) A method of providing a resin layer having a photochromic compound dispersed on a surface of a plastic molded article such as a lens, by coating or casting polymerization.
(C) Bonding two optical sheets by using an adhesive layer that is formed of an adhesive resin having a photochromic compound dispersed.

Among these, a means disclosed in Patent Document 1 is particularly effective, where a photochromic curable composition is applied onto a plastic lens by spin coating or the like, followed by photocuring to form a photochromic coating layer, because the method is applicable to various existing lenses.

Among photochromic compounds used in photochromic optical articles, those that return to the original decolored state not only by light of a specific wavelength but also by heat, when they isomerize (fading reaction) from a color-developed state to a decolored state are referred to as T-type photochromic compounds. The T-type photochromic compounds have been well studied and developed as materials for photochromic lenses.

In general, the following characteristics (1) to (5) are required for the T-type photochromic compound.

(1) A degree of coloration (hereinafter, referred to as initial coloration) in a visible light region before irradiation with ultraviolet rays is low.
(2) A speed from the start of ultraviolet radiation until the color developing density reaches saturation is high (hereinafter, also referred to as having a high color developing sensitivity).
(3) A speed (hereinafter, referred to as a fading rate) from when ultraviolet radiation is stopped to when the photochromic compound returns to the original state is high.
(4) Repetitive durability of reversible actions of (2) and (3) is good.
(5) The photochromic compound dissolves in the monomer composition at a high concentration, and is well dispersed in a cured product of the monomer composition.

Many chromene compounds have been studied as a T-type photochromic compound that satisfies these characteristics. The chromene compound exhibits an excellent photochromic property in an environment where structural changes are likely to occur, such as in a solution. However, in an environment in which structural changes are unlikely to occur, such as in a polymer solid matrix, a fading half-life tends to be longer, that is, a fading rate tends to decrease. The reason for this is considered to be as follows: the reversible structural change of the chromene compound is restricted because free space is overwhelmingly smaller in the polymer solid matrix than in the solution. When a chromene compound is dispersed in a polymer solid matrix such as various plastic materials as described above, an excellent photochromic property inherent to the chromene compound cannot be sufficiently exhibited, and in particular, the fading rate may decrease. Thus, various photochromic curable compositions have been investigated in order to create free space even in a polymer solid matrix.

The following (a) to (d) have been proposed as representative examples of photochromic coating agents that can be applied to eyeglass lenses.

(a) A mixture including a urethane oligomer and a photochromic compound dissolved therein (see Patent Document 1).
(b) A mixture where a polymerizable monomer having one (meth)acryloyl group, a polymerizable monomer having two (meth)acryloyl groups, and a polymerizable monomer having three or more (meth)acryloyl groups are combined at a specific ratio, and a photochromic compound is dissolved in an obtained combination (see Patent Document 2).
(c) A mixture where only a plurality of types selected from polymerizable monomers having two (meth)acryloyl groups are used and a photochromic compound is dissolved in such polymerizable monomer components (see Patent Document 3).
(d) A curable composition containing a photochromic compound, an amine compound, a radically polymerizable monomer having a silanol group and/or a radically polymerizable monomer having an isocyanate group (see Patent Document 4).

### Citation List

### Patent Document

Patent Document 1: PCT International Publication No. WO98/37115
Patent Document 2: US Patent No. 5914174
Patent Document 3: PCT International Publication No. WO01/02449
Patent Document 4: PCT International Publication No. WO03/11967
Patent Document 5: PCT International Publication No. WO2015/054036
Patent Document 6: PCT International Publication No. WO2009/075388
Patent Document 7: European Patent Application, Publication No. 3418347

### DISCLOSURE OF THE INVENTION

### Problems to be Solved by the Invention

An object of the present invention is to provide a curable composition capable of realizing a cured product that is excellent in performance of a functional dye, appearance, and adhesion; a cured product; a laminate; a lens; and eyeglasses.

### Means for Solving the Problems

The present disclosure relates to a curable composition. The curable composition includes a first radically polymerizable monomer represented by the following formula (1) and a functional dye,and a content of the first radically polymerizable monomer is 15% by mass or more and 34% by mass or less: 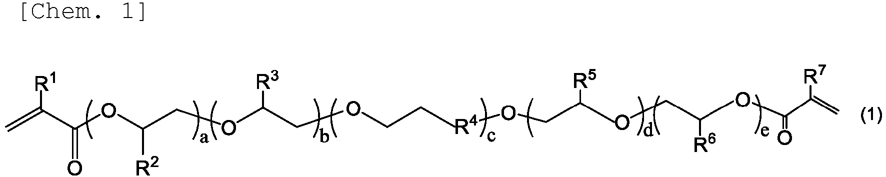 in which R¹ is a hydrogen atom or a methyl group,
R² is a hydrogen atom or an alkyl group having 1 to 3 carbon atoms,
R³ is a hydrogen atom or an alkyl group having 1 to 3 carbon atoms,
R⁴ is a linear or branched alkylene group having 1 to 7 carbon atoms which may have a substituent,
R⁵ is a hydrogen atom or an alkyl group having 1 to 3 carbon atoms,
R⁶ is a hydrogen atom or an alkyl group having 1 to 3 carbon atoms,
R⁷ is a hydrogen atom or a methyl group,
a is 0 to 10,
b is 0 to 20,
c is 2 to 20,
c is a number greater than each of a, b, d, and e,
d is 0 to 20, and
e is 0 to 10.

In addition, according to the present disclosure, a cured product is provided. The cured product is obtained by curing the curable composition according to an embodiment.

Also, according to the present disclosure, a laminate is provided. The laminate includes an optical substrate and a cured product according to the embodiment, the cured product being located on a surface of the optical substrate.

Also, according to the present disclosure, a lens is provided. The lens includes a lens substrate and the cured product according to the embodiment, the cure product being located on a surface of the optical substrate.

According to the present disclosure, eyeglasses are also provided. The eyeglasses include lenses according to the embodiment.

### Effects of the Invention

According to the present invention, a curable composition capable of realizing a cured product that is excellent in performance of a functional dye, appearance, and adhesion; a cured product; a laminate; a lens; and eyeglasses are provided.

### BRIEF DESCRIPTION OF THE DRAWINGS

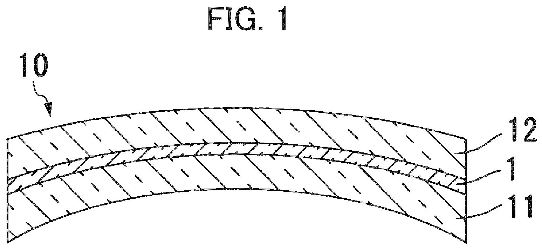

[FIG. 1] A cross-sectional view schematically showing an example of a laminate according to the embodiment.

### PREFERRED MODE FOR CARRYING OUT THE INVENTION

A curable composition according to the embodiment includes a first radically polymerizable monomer (A-1) represented by the formula (1) as a radically polymerizable component (A) to be combined with a functional dye (B). A content of the first radically polymerizable monomer (A-1) is 15% by mass or more and 34% by mass or less. When such a curable composition is used, a cured product having excellent functionality of the functional dye as well as excellent appearance and adhesion can be realized. The reason for this is not clearly elucidated, but the present inventors infer as follows.

First, the functional dye such as a photochromic compound includes a compound that changes its structure by energy of light, etc. and develops color, decolors, or changes color. A soft segment in a polymer solid matrix is important for such a functional dye to readily undergo structural change in the polymeric solid matrix. The first radically polymerizable monomer has a polyalkylene glycol chain structure having an alkylene oxide having 3 to 10 carbon atoms as a repeating unit. In the polymer of the curable composition containing the first radically polymerizable monomer, a plurality of alkylene oxide chain portions aggregate to form a soft segment in which these alkylene oxide chain polymers are arranged. A distance between oxygen atoms of the alkylene oxide chains in this soft segment is considered to be larger than a distance between oxygen atoms of the alkylene oxide chains in a soft segment formed of a radically polymerizable monomer having a polyalkylene glycol chain structure having 2 or less carbon atoms. That is, alkylene oxide chains having a relatively large number of carbon atoms are considered to be less likely to aggregate than alkylene oxide chains having a relatively small number of carbon atoms, which results in a larger interpolymer chain distance. When the interpolymer chain distance is large, free space necessary for the structural change of the functional dye is large, and therefore, the structural change is considered to be less likely to be restricted.

Furthermore, by using the curable composition according to the embodiment, it is possible to realize a cured product having both high functionality of the functional dye and high hardness. That is, a cured product having high hardness tends to have low flexibility in the soft segment or have a small proportion of the soft segment, which tends to result in a decrease in the functionality of the functional dye. Since the curable composition according to the embodiment uses a monomer having an alkylene oxide chain having a relatively large number of carbon atoms, the flexibility of the alkylene oxide chain constituting the soft segment is considered to be lower than the flexibility of the soft segment constituted by the alkylene oxide chain having 2 or less carbon atoms. On the other hand, as described above, since the distance between alkylene oxide chains is large, the free space in the soft segment is spacious, and the functionality of the functional dye can be enhanced. Therefore, even if a proportion of the first radically polymerizable monomer in the curable composition is increased in order to enhance the functionality of the functional dye, a cured product having high hardness can be realized.

In addition, by using the curable composition according to the embodiment, adhesion between a cured product of the curable composition and a substrate on which this cured product is laminated can be enhanced. That is, the curable composition is applied to an optical substrate such as a lens substrate and is cured to form a laminate of the cured product and the lens substrate. In this laminate, a primer layer containing, for example, a urethane-based resin is provided in some cases in order to enhance the adhesion between the optical substrate and the cured product. When the primer layer is provided, the laminate turns into a laminate in which the optical substrate, the primer layer, and the cured product are laminated in this order. In general, in order to obtain high adhesion in a laminate, it is necessary to achieve both adhesion between an optical substrate and a primer layer and adhesion between a cured product and a primer layer. In order to increase the adhesion between a cured product and a primer layer, the curable composition is considered necessary to appropriately permeate into the primer layer and form a mixed layer.

The present inventors have found that a proportion of the first radically polymerizable monomer needs to be 34% by mass or less in the curable composition containing the first radically polymerizable monomer in order to sufficiently form the mixed layer. That is, the first radically polymerizable monomer has lower compatibility with the primer layer compared with di(meth)acrylate having an alkylene oxide chain having 2 or less carbon atoms. Therefore, when the first radically polymerizable monomer is contained in an amount of more than 34% by mass, the curable composition is less likely to permeate into the primer layer, and thus the first radically polymerizable monomer is considered difficult to form a mixed layer with the primer layer, resulting in lowered adhesion with the laminate. On the other hand, when an amount of the first radically polymerizable monomer is excessively small, white turbidity may occur in the laminate. This is considered as follows: a polymerizable composition having an excessively small amount of the first radically polymerizable monomer easily permeates into the primer layer, which results in formation of a mixed layer having an excessive thickness. That is, the first radically polymerizable monomer is considered to re-aggregate in this mixed layer having an excessive thickness, generating white turbidity. On the other hand, the curable composition according to the embodiment containing 15 to 34% by mass of the first radically polymerizable monomer appropriately erodes the primer layer, and therefore can realize a laminate in which white turbidity is suppressed while maintaining high adhesion.

Hereinafter, each component will be described in detail.

### <Radically Polymerizable Monomer (A)>

The radically polymerizable monomer (A) includes a first radically polymerizable monomer (A-1) represented by the following formula (1). Hereinafter, the first radically polymerizable monomer represented by the formula (1) is also referred to as a component (A-1). The radically polymerizable monomer (A) is also referred to as a component (A). The radically polymerizable monomer (A) may contain another radically polymerizable monomer depending on the desired properties of the cured product. The other polymerizable monomer is not particularly limited, as long as it can polymerize with the component (A-1), and a known one can be used. However, a radically polymerizable monomer having a (meth)acrylate group is preferable, and a radically polymerizable monomer having three or more (meth)acryloyl groups in one molecule (A-2) and another radically polymerizable monomer having a (meth)acryloyl group (A-3) are preferably used.

### <Component (A-1): Radically Polymerizable Monomer represented by the Following Formula (1)>

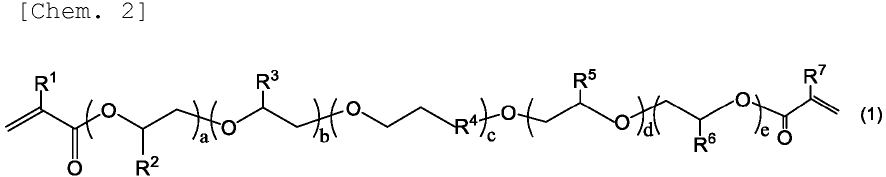

In the formula, R¹ and R⁷ each independently are a hydrogen atom or a methyl group. That is, the component (A-1) may be diacrylate, dimethacrylate, or methacrylate acrylate represented by the formula (1). Using the component (A-1) which is diacrylate tends to result in a cured product with a high fading rate of the photochromic dye. Using the component (A-1) which is dimethacrylate tends to result in a cured product with a high color developing density of the photochromic dye. R¹ and R⁷ are preferably methyl groups.

R⁴ is a linear or branched alkylene group having 1 to 7 carbon atoms which may have a substituent.
c is 2 to 20.
c is a number greater than a, a number greater than b, a number greater than d, and a number greater than e.

That is, the repeating unit -(OCH₂CH₂R⁴)-, to which the subscript c is added, is a first alkylene oxide unit having 3 to 9 carbon atoms. A polymeric region constituted by this repeating unit may form a soft segment of the cured product. R⁴ is preferably a linear alkylene group. The alkylene group preferably has 1 to 4 carbon atoms, and more preferably 2 to 4 carbon atoms. When the number of carbon atoms of the alkylene group is large, the functionality of the cured product is further enhanced. On the other hand, when the number of carbon atoms of the alkylene group is too large, an amount of the soft segment per unit mass decreases, which may deteriorate the functionality of the cured product.

From the viewpoint of achieving both functionality and hardness, as well as adhesion, c is preferably 2 to 19, more preferably 2 to 18, still more preferably 3 to 17, and particularly preferably 5 to 16.
c may be 6 to 18, or 9 to 15.

R², R³, R⁵, and R⁶ each independently represent a hydrogen atom or an alkyl group having 1 to 3 carbon atoms. Preferably, R², R³, R⁵, and R⁶ are each independently a hydrogen atom or a methyl group. R² and R³ are different groups from each other. R⁵ and R⁶ are different groups from each other. R² and R⁶ may be the same group. R³ and R⁵ may be the same group.
a and e are 0 to 10. From the viewpoint of achieving both functionality and hardness, a and e are preferably 0 to 5, more preferably 0 to 2, still more preferably 0 or 1, and most preferably 0.
b and d are 0 to 20. From the viewpoint of achieving both functionality and hardness, b and d are preferably 0 to 15, more preferably 0 to 10, still more preferably 0 to 5, and particularly preferably 0.

In other words, the component (A-1) may be a monomer further including at least one of a second alkylene oxide unit, which is a repeating unit to which b and d are added, or a third alkylene oxide unit, which is a repeating unit, to which a and e are added.

In the component (A-1), it is preferable that a, b, d, and e are 0, that is, only the first alkylene oxide unit is preferably contained. Using such a component (A-1) tends to result in higher hardness of the cured product.
c may be 4 or more and 20 or less, or 6 or more and 15 or less. c may be 5 or more and 10 or less, or 9 or more and 14 or less. A degree of biomass of the component (A-1) is preferably 60% by mass or more, more preferably 70% by mass or more, and still more preferably 90% by mass or more. The upper limit of the degree of biomass is, for example, 100% by mass or less, or 98% by mass or less.

This component (A-1) is represented by, for example, the following formula (3).

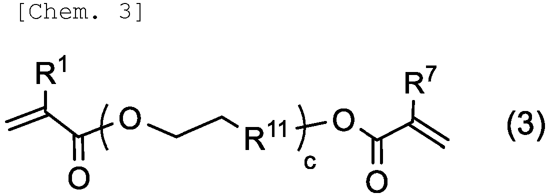

In the formula (3), R¹, R⁷, and c are as defined in the formula (1).

R¹¹ is a linear alkylene group having 1 to 7 carbon atoms. R¹¹ is preferably a linear alkylene group having 1 to 5 carbon atoms, more preferably a linear alkylene group having 1 to 3 carbon atoms, and most preferably a linear alkylene group having 2 carbon atoms.

Examples of the compound represented by the formula (3) include polytrimethylene glycol di(meth)acrylate, polytetramethylene glycol di(meth)acrylate, polypentamethylene glycol di(meth)acrylate, polyhexamethylene glycol di(meth)acrylate, etc.

A number average molecular weight of the component (A-1) represented by the formula (3) is preferably 200 or more and 2,000 or less. The number average molecular weight of the component (A-1) may be 400 or more and 1,500 or less, or 600 or more and 1,000 or less. The number average molecular weight of the component (A-1) represented by the formula (3) may be 400 or more and 1,800 or less, 550 or more and 1,700 or less, 650 or more and 1,600 or less, or 600 or more and 2,000 or less. The number average molecular weight may be 200 or more and 9,000 or less, 200 or more and 7,000 or less, 200 or more and 6,000 or less, or 250 or more and 5,000 or less. The number average molecular weight can be measured, for example, by gel filtration chromatography (GPC).

Using a component (A-1) in which a and e are 0 and b and d are 1 or more, that is, a component (A-1) further including the second alkylene oxide tends to result in a cured product having high functionality of the functional dye.
b and d may be 2 or more and 15 or less, or 4 or more and 10 or less.

Examples of the component (A-1) are as follows.

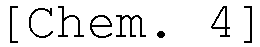

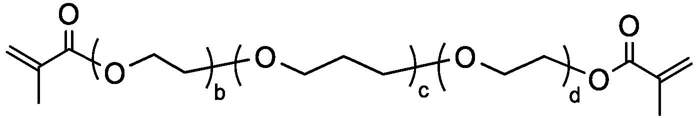

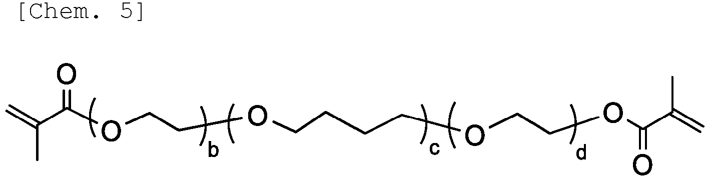

In addition, the component (A-1) may be a monomer in which a, b, d, and e are 1 or more, that is, the monomer may further include both the second alkylene oxide unit and the third alkylene oxide unit. In this case, the second alkylene oxide unit and the third alkylene oxide unit have different structures.

Examples of the component (A-1) are as follows.

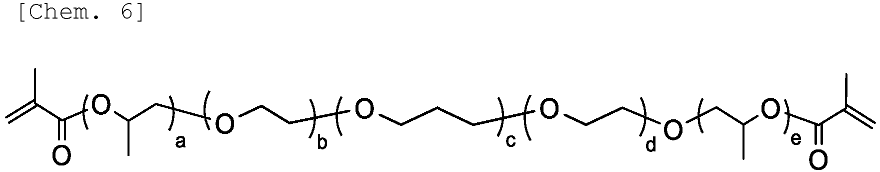

The component (A-1) can be produced, for example, by the following method.

The component (A-1) having an acryloyl group can be synthesized by esterification of a polyol compound represented by the following formula with acrylic acid. R², R³, R⁴, R⁵, R⁶, a, b, c, d and e of the following polyol compound are as defined in the formula (1). The polyol compound may be vegetable or petroleum derived.

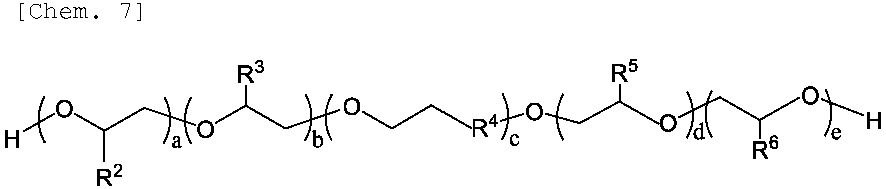

Specifically, in the presence of a mineral acid such as sulfuric acid or hydrochloric acid, an organic acid such as aromatic sulfonic acid, or a Lewis acid such as boron fluoride ether, the polyol compound and acrylic acid dissolved in a solvent such as toluene are stirred while being heated as necessary, and generated water is removed by azeotropic distillation to progress a reaction. Examples of the method for removing water in the esterification reaction include a method for removing water with a drying agent such as anhydrous magnesium sulfate or molecular sieves, and a method for removing water in the presence of a dehydrating agent typified by dicyclohexylcarbodiimide, etc.

In addition, the component (A-1) having an acryloyl group can also be synthesized by carrying out an esterification reaction using acrylic acid halide. Specifically, a method, in which in the presence of a base such as pyridine or dimethylaniline, the polyol compound and acrylic acid dissolved in an ether-based solvent such as tetrahydrofuran are stirred while being heated as necessary, and generated hydrogen halide is removed, can be employed.

Further, the component (A-1) having an acryloyl group can be synthesized by transesterification with an anhydride of acrylic acid or an ester compound such as methyl acrylate. Specifically, a method in which the polyol compound and acrylic acid dissolved in a solvent such as toluene in the presence of an acidic catalyst such as an aromatic sulfonic acid or a basic catalyst such as sodium acetate, pyridine, etc. are stirred while being heated as necessary can be employed.

The component (A-1) having a methacryloyl group can be synthesized in the same manner as described above, for example, by using methacrylic acid instead of acrylic acid.

Among the polyol compounds, a polyol compound in which a and e are 0 and b and d are 1 or more, that is, a polyol having the second alkylene oxide unit can be synthesized, for example, by the following method.

The polyol having the second alkylene oxide unit can be synthesized by reacting H-(OCH₂CH₂R⁴)c-OH with a cyclic ether compound such as ethylene oxide or propylene oxide. The polyol compound having the second alkylene oxide unit can be synthesized, for example, by carrying out a reaction at a high temperature and a high pressure in a nitrogen-substituted autoclave in the presence of a catalyst such as an alkali metal hydroxide such as potassium hydroxide, etc.

Among the polyol compounds, a polyol compound in which a, b, d, and e are 1 or more, that is, a component (A-1) further including the second and third alkylene oxide units can be synthesized, for example, by the following method.

The polyol compound having a third alkylene oxide unit is synthesized by reacting the polyol compound having the second alkylene oxide unit with a cyclic ether compound, and the obtained polyol compound further having the third alkylene oxide unit is reacted with acrylic acid or methacrylic acid by the same method as described above to synthesize a component (A-1) further containing the second and third alkylene oxide units.

### <Second Radically Polymerizable Monomer having Three or More (Meth)acryloyl Groups in One Molecule (A-2)>

The curable composition according to the embodiment may further include a second radically polymerizable monomer having three or more (meth)acryloyl groups in one molecule. Hereinafter, the second radically polymerizable monomer having three or more (meth)acryloyl groups in one molecule is also referred to as a component (A-2). When polyfunctional (meth)acrylate is contained, the hardness of the cured product tends to increase.

Examples of the component (A-2) include a polyfunctional (meth)acrylate represented by the following formula (I), a polyfunctional (meth)acrylate having a urethane bond, and a polyfunctional (meth)acrylate not falling within those described above, and a polyfunctional (meth)acrylate represented by the following formula (I) is particularly preferable.

### <Polyfunctional (Meth)Acrylate represented by the Following Formula (I)>

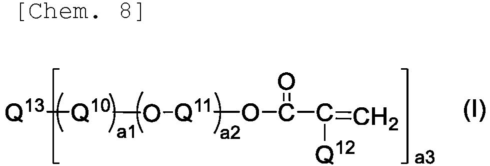

In formula (I), Q¹⁰ is a methylene group.
a1 is an integer of 0 or 1. Q¹¹ is a linear or branched alkylene group having 1 to 3 carbon atoms. Q¹¹ is preferably a linear alkylene group. Q¹¹ is preferably an alkylene group having 2 or 3 carbon atoms. Q¹¹ is more preferably an ethylene group, a n-propylene group, or a n-butylene group.

a2 is 0, 1, 2, or 3.
a2 is preferably 1, 2 or 3. Q¹² is a hydrogen atom or a methyl group. Q¹² is preferably a methyl group. Q¹³ is a trivalent to hexavalent organic group having 1 to 10 carbon atoms. Examples of the organic group represented by Q¹³ include a group derived from a polyol, a trivalent to hexavalent hydrocarbon group, and an organic group containing a trivalent to hexavalent urethane bond. Q¹³ is preferably a tetravalent hydrocarbon group or a hexavalent hydrocarbon group. Q¹³ may be a group derived from trimethylolpropane, a group derived from glycerin, a group derived from pentaerythritol, a group derived from ditrimethylolpropane, or a group derived from dipentaerythritol.

a3 is 3, 4, 5, or 6.
a3 is preferably 3 or 4. The polyfunctional (meth)acrylate represented by the formula (I) more preferably contains trifunctional to tetrafunctional (meth)acrylate represented by the following formula (II).

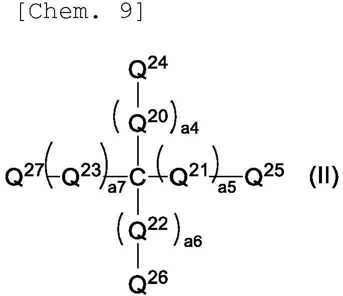

In Formula (II), Q²⁰, Q²¹, Q²², and Q²³ each independently are a methylene group. a4, a5, a6, and a7 each independently are an integer of 0 or 1. Q²⁴, Q²⁵, and Q²⁶ each independently represent a monovalent group represented by the following formula (III). Q²⁴, Q²⁵, and Q²⁶ may have different structures or the same structure. Q²⁴, Q²⁵, and Q²⁶ preferably have the same structure. Q²⁷ is a hydrogen atom, a linear or branched alkyl group having 1 to 5 carbon atoms, a linear or branched alkoxy group having 1 to 5 carbon atoms, or a monovalent group represented by the following formula (III). Q²⁷ is preferably a hydrogen atom, a linear alkyl group having 1 to 3 carbon atoms, or a monovalent group represented by the following formula (III).

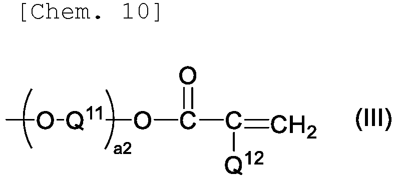

In formula (III), Q¹¹, Q¹² and a2 are as defined in formula (I).

Examples of the polyfunctional (meth)acrylate represented by the formula (I) include trimethylolpropane trimethacrylate, trimethylolpropane triacrylate, tetramethylolmethane trimethacrylate, tetramethylolmethantriacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, dipentaerythritol hexaacrylate, dipentaerythritol pentaacrylate, dipentaerythritol hexamethacrylate, dipentaerythritol pentamethacrylate, glycerin trimethacrylate, glycerin triacrylate, ethoxylated trimethylolpropane trimethacrylate, propoxylated trimethylolpropane trimethacrylate, butoxylated trimethylolpropane trimethacrylate, ethoxylated trimethylolpropane triacrylate, propoxylated trimethylolpropane triacrylate, butoxylated trimethylolpropane triacrylate, ethoxylated glycerin trimethacrylate, propoxylated glycerin trimethacrylate, butoxylated glycerin trimethacrylate, ethoxylated glycerin triacrylate, propoxylated glycerin triacrylate, butoxylated glycerin triacrylate, ethoxylated pentaerythritol tetramethacrylate, propoxylated pentaerythritol tetramethacrylate, butoxylated pentaerythritol tetramethacrylate, ethoxylated pentaerythritol tetraacrylate, propoxylated pentaerythritol tetraacrylate, butoxylated pentaerythritol tetraacrylate, etc.

### <Polyfunctional (Meth)acrylate having Urethane Bond>

The polyfunctional (meth)acrylate having a urethane bond is obtained by reacting a polyisocyanate compound having three or more isocyanate groups in the molecule, a polyol compound having two or more hydroxy groups in the molecule, and a hydroxy group-containing (meth)acrylate. The polyfunctional (meth)acrylate having a urethane bond is preferably a polyfunctional (meth)acrylate having a urethane bond having four or more (meth)acryloyl groups in the molecule. Examples of commercially available products include U-4HA (molecular weight: 596, number of functional groups: 4), U-6HA (molecular weight: 1,019, number of functional groups: 6), U-6LPA (molecular weight: 818, number of functional groups: 6), and U-15HA (molecular weight: 2,300, number of functional groups: 15), which are manufactured by Shin-Nakamura Chemical.

### <Polyfunctional (Meth)acrylate Not Falling within Those Described Above>

Examples of the polyfunctional (meth)acrylate other than the polyfunctional (meth)acrylate represented by the formula (I) and the polyfunctional (meth)acrylate having a urethane bond include compounds in which a terminal of a polyester compound is modified with a (meth)acryloyl group. As such a polyester (meth)acrylate compound, various polyester (meth)acrylate compounds having different molecular weights and modified amounts of (meth)acryloyl groups are commercially available, and these can be used. Examples thereof include a tetrafunctional polyester oligomer (EB80, etc. with a molecular weight of 2,500 to 3,500, manufactured by Daicel UCB Company, LTD.), a hexafunctional polyester oligomer (EB450, etc. with a molecular weight of 6,000 to 8,000, manufactured by Daicel UCB Company, LTD.), a hexafunctional polyester oligomer (EB1830, etc. with a molecular weight of 45,000 to 55,000, manufactured by Daicel UCB Company, LTD.), and a tetrafunctional polyester oligomer (particularly, GX8488B, etc. with a molecular weight of 10,000 manufactured by DKS).

### <(A-3) Another Radically Polymerizable Monomer Having (Meth)acryloyl Group>

Examples of the other radically polymerizable monomer having a (meth)acryloyl group include a radically polymerizable monomer having a (meth)acryloyl group in the molecular structure and not corresponding to (A-1) or (A-2). Such a radically polymerizable monomer is not particularly limited, and a known monomer can be used. A bifunctional (meth)acrylate having two (meth)acryloyl groups in the molecule and/or a monofunctional (meth)acrylate having only one (meth)acryloyl group can also be included.

### <Bifunctional (Meth)acrylate Having Two (Meth)acryloyl Groups in the Molecule.>

The curable composition according to the embodiment may include the following bifunctional (meth)acrylate. When a di(meth)acrylate other than the first radically polymerizable compound is contained, the functionality of the functional dye may be enhanced. Examples thereof include bifunctional (meth)acrylate represented by the following formula (4), the following formula (5), or the following formula (6), bifunctional (meth)acrylate having a urethane bond, and bifunctional (meth)acrylate not falling within those described above.

### <Bifunctional (Meth)acrylate Compound Represented by the Following Formula (4)>

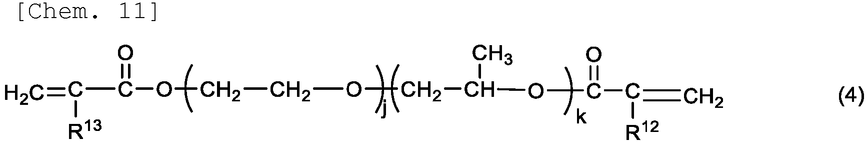

R¹² and R¹³ each are a hydrogen atom or a methyl group. j and k each independently are an integer of 0 or more, and j + k is an integer of 2 or more. Further, the bifunctional (meth)acrylate compound represented by the formula (4) is often obtained as a mixture due to production restriction. Therefore, j + k is 2 or more as an average value, preferably an integer of 2 or more and 50 or less as an average value.

Examples of the compound represented by the above formula (4) are as follows:
diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, dimethacrylate consisting of a mixture of polypropylene glycol and polyethylene glycol (polyethylene glycol dimethacrylate), tripropylene glycol dimethacrylate, tetrapropylene glycol dimethacrylate, polypropylene glycol dimethacrylate, polyethylene glycol diacrylate, polyethylene glycol diacrylate, and polyethylene glycol methacrylate acrylate.

### <Bifunctional (Meth)acrylate Represented by the Following Formula (5)>

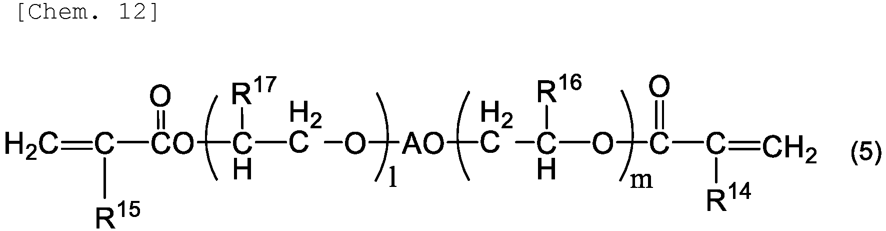

R¹⁴ and R¹⁵ each are a hydrogen atom or a methyl group. R¹⁶ and R¹⁷ each are a hydrogen atom or a methyl group.

A is a divalent organic group. A is a linear or branched alkylene group having 1 to 20 carbon atoms, a phenylene group which may have halogen or an alkyl group having 1 to 5 carbon atoms as a substituent, a cycloalkylene group, a bicycloalkylene group, a tricycloalkylene group, or a group represented by any one of the following formulae.

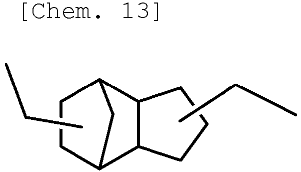

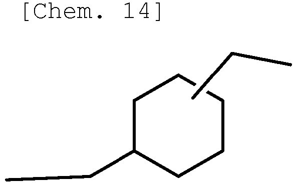

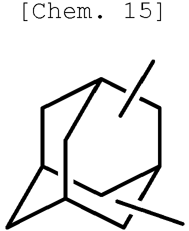

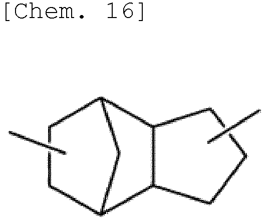

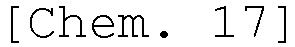

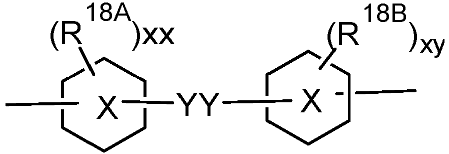

In the formulae, R^{18A} and R^{18B} each represent a hydrogen atom, an alkyl group having 1 to 5 carbon atoms, or a halogen atom. xx and xy are integers of 0 to 4, or 0 to 10. Ring X is a benzene ring or a cyclohexane ring. YY is -O-, -S-, -(SO₂)-, -CO-, -CH₂-, -CH=CH-, -C(CH₃)₂-, -C(CH₃)(C₆H₅)-, or a group represented by any one of the following formulae.

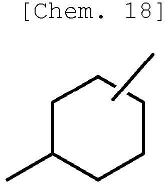

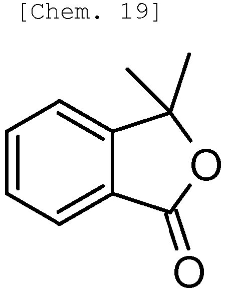

In the above formula (5), l and m each are an integer of 1 or more, and l + m is an average value of 2 or more and 30 or less.

Examples of the bifunctional (meth)acrylate represented by the formula (5) include the following bisphenol A di(meth)acrylate:
2,2-bis[4-(methacryloyloxyethoxy)phenyl]propane, 2,2-bis[3,5-dibromo-4-(methacryloyloxyethoxy)phenyl]propane, 2,2-bis(4-(methacryloyloxydipropoxy)phenyl)propane, 2,2-bis[4-(acryloyloxydiethoxy)phenyl]propane, 2,2-bis[4-(acryloyloxypolyethoxy)phenyl]propane, 2,2-bis[4-(methacryloyloxypolyethoxy)phenyl]propane, 1,3-adamantanediol dimethacrylate, and ditrimethylolcyclodecane diacrylate.

### <Bifunctional (Meth)acrylate Represented by the Following Formula (6)>

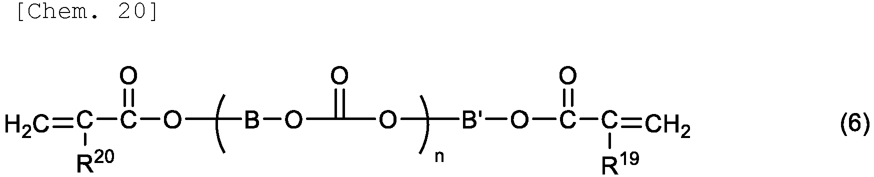

R¹⁹ and R²⁰ each are a hydrogen atom or a methyl group.

n is a number of 1 to 20 as an average value.

B and B' each independently represent a linear or branched alkylene group having 2 to 15 carbon atoms. B and B' may be the same or different from each other. When a plurality of B groups are present, the plurality of B moieties may be the same group or different groups.

The bifunctional (meth)acrylate represented by the above formula (6) can be produced by reacting a polycarbonate diol with (meth)acrylic acid.

Examples of the polycarbonate diol to be used herein include the following. Specifically, examples thereof include a polycarbonate diol (average molecular weight 500 to 2,000) obtained by phosgeneation of trimethylene glycol, a polycarbonate diol (average molecular weight 500 to 2,000) obtained by phosgeneation of tetramethylene glycol, a polycarbonate diol (average molecular weight 500 to 2,000) obtained by phosgenation of pentamethylene glycol, a polycarbonate diol (average molecular weight 500 to 2,000) obtained by phosgenation of hexamethylene glycol, polycarbonate diol (average molecular weight 500 to 2,000) obtained by phosgenation of octamethylene glycol, polycarbonate diol (average molecular weight 500 to 2,000) obtained by phosgenation of nonamethylene glycol, polycarbonate diol (average molecular weight 500 to 2,000) obtained by phosgenation of triethylene glycol, polycarbonate diol (average molecular weight 500 to 2,000) obtained by phosgenation of tetramethylene glycol and hexamethylene diglycol, polycarbonate diol (average molecular weight 500 to 2,000) obtained by phosgenation of pentamethylene glycol and hexamethylene glycol, polycarbonate diol (average molecular weight 500 to 2,000) obtained by phosgenation of tetramethylene glycol and octamethylene glycol, polycarbonate diol (average molecular weight 500 to 2,000) obtained by phosgenation of hexamethylene glycol and octamethylene glycol, and polycarbonate diol (average molecular weight 500 to 2,000) obtained by phosgenation of 1-methyltrimethylene glycol.

### <Bifunctional (Meth)acrylate Having Urethane Bond>

Examples of the bifunctional (meth)acrylate having a urethane bond include those obtained by reacting a polyisocyanate compound having two or more isocyanate groups in the molecule, a polyol compound having two or more hydroxy groups in the molecule, and a hydroxygroup-containing (meth)acrylate.

Preferable examples of the polyisocyanate include hexamethylene diisocyanate, isophorone diisocyanate, lysine isocyanate, 2,2,4-hexamethylene diisocyanate, dimeric acid diisocyanate, isopropylidene bis-4-cyclohexylisocyanate, dicyclohexylmethane diisocyanate, norbornene diisocyanate, or methylcyclohexane diisocyanate.

Examples of the polyol include polyalkylene glycols having repeating units having 2 to 4 carbon atoms, such as ethylene oxide, propylene oxide, and hexamethylene oxide, or polyester diols such as polycaprolactone diol, etc. Further examples of the polyol include polycarbonate diol, polybutadiene diol, or pentaerythritol, ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, 1,4-cyclohexanedimethanol, glycerin, trimethylolpropane, etc.

In addition, by reacting the above-mentioned polyisocyanate with polyol to form a urethane polymer, and further reacting the urethane polymer with 2-hydroxy(meth)acrylate to obtain a reaction mixture, the obtained reaction mixture also can be used. A urethane (meth)acrylate monomer which is a reaction mixture obtained by directly reacting the diisocyanate with 2-hydroxy(meth)acrylate, and the like can also be used.

Examples of the hydroxy group-containing (meth)acrylate include 2-hydroxyethyl (meth)acrylate, 2-hydroxypropyl (meth)acrylate, 3-hydroxypropyl (meth)acrylate, 3-hydroxybutyl (meth)acrylate, and 4-hydroxybutyl (meth)acrylate, etc.

As the bifunctional (meth)acrylate having a urethane bond, commercially available products can be used without any limitation, and examples of the commercially available products include U-2PPA (molecular weight: 482), UA-122P (molecular weight: 1,100), and U-122P (molecular weight: 1,100) manufactured by Shin-Nakamura Chemical, and EB4858 (molecular weight: 454) manufactured by Daicel UCB Company, Ltd.

### <Bifunctional (Meth)acrylate Not Falling Within Those Described Above>

Examples of the "bifunctional (meth)acrylate not falling within those described above" other than the bifunctional (meth)acrylate represented by the formula (4), the formula (5) or the formula (6) and the bifunctional (meth)acrylate having a urethan bond include bifunctional (meth)acrylate containing a sulfur atom. The sulfur atom preferably forms a part of the molecular chain as a sulfide group. Examples thereof include bis(2-methacryloyloxyethylthioethyl)sulfide, bis(methacryloyloxyethyl)sulfide, bis(acryloyloxyethyl)sulfide, 1,2-bis(methacryloyloxyethylthio)ethane, 1,2-bis(acryloyloxyethyl)ethane, bis(2-methacryloyloxyethylthioethyl)sulfide, bis(2-acryloyloxyethylthioethyl)sulfide, 1,2-bis(methacryloyloxyethylthioethylthio)ethane, 1,2-bis(acryloyloxyethylthioethylthio)ethane, 1,2-bis(methacryloyloxyisopropylthioisopropyl)sulfide, and 1,2-bis(acryloyloxyisopropylthioisopropyl)sulfide.

For the above-described bifunctional (meth)acrylate compounds, a single component in each of the components, which have been individually explained, can be used or a plurality of components can also be used. Further, a plurality of components described individually may be used in combination. When a plurality of components are used in combination, a mass serving as a reference is a total amount of the plurality of components.

### <Third Radically Polymerizable Monomer Having One (Meth)acryloyl Group in One Molecule>

The curable composition according to the embodiment may further include a third radically polymerizable monomer having one (meth)acryloyl group in one molecule. The third radically polymerizable monomer may be a monofunctional (meth)acrylate.

Examples of the monofunctional (meth)acrylate include monofunctional (meth)acrylate represented by the following formula (7).

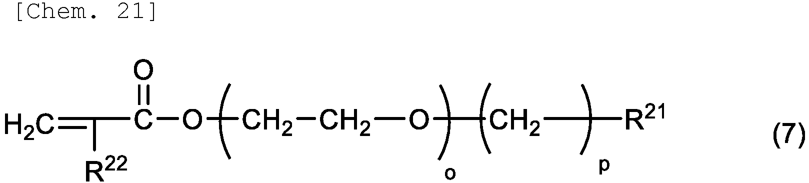

R²¹ is a hydrogen atom, a methyldimethoxysilyl group, a trimethoxysilyl group, a glycidyl group, a pentamethylpiperidino group, or a 2,2,6,6-tetramethyl piperidino group. R²² is a hydrogen atom or a methyl group.
o is an integer of 0 to 10.
p is an integer of 0 to 20.

R²¹ is preferably a methyldimethoxysilyl group, a trimethoxysilyl group, or a glycidyl group. When a monofunctional acrylate having such a functional group is contained, the adhesiveness between the cured product and the substrate tends to improve.

Examples of the monofunctional (meth)acrylate represented by the formula (7) include methoxypolyethylene glycol methacrylate, methoxypolyethylene glycol acrylate, stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidyl methacrylate, 1,2,2,6,6-pentamethyl-4-piperidyl methacrylate, 2,2,6,6-tetramethyl-4-piperidyl methacrylate, and the like.

### <Another Radically Polymerizable Monomer>

The curable composition according to the embodiment may further contain another radically polymerizable monomer. The other radically polymerizable monomer is not particularly limited as long as it is a radically polymerizable monomer capable of polymerizing with the component (A-1), and a known radically polymerizable monomer can be used. For example, a radically polymerizable polyrotaxane, a radically polymerizable silsesquioxane compound, an allyl-based compound, and a vinyl-based compound are preferably used.

### <Polyrotaxane Having Radically Polymerizable Property>

Polyrotaxane has a composite molecular structure composed of a molecular axle and a plurality of cyclic molecules that trap the molecular axle. Bulky terminal groups are formed at both ends of the molecular axle to prevent the cyclic molecules from detaching from the molecular axle. The radically polymerizable polyrotaxane has a radically polymerizable group introduced into a side chain of the cyclic molecule. The radically polymerizable group is introduced by, for example, modifying 1 mol% or more and less than 100 mol% of hydroxy groups of the cyclic molecule to radically polymerizable groups. A modification proportion can be calculated by (number of moles of introduced polymerizable groups)/(number of moles of total OH groups in the side chain)×100. From the viewpoints of adhesion and/or mechanical strength and functionality of the resulting cured product, the modification proportion is preferably 10 mol% or more and 95 mol% or less.

When weight average molecular weight of the molecular axle is too large, compatibility with the other polymerizable monomer or the like tends to decrease. When it is too small, mobility of the cyclic molecules tends to decrease. A weight average molecular weight of the molecular axle is preferably in the range of 1,000 to 10,0000, more preferably in the range of 5,000 to 80,000, and most preferably in the range of 8,000 to 50,000.

The cyclic molecule is preferably a cyclodextrin ring, a crown ether ring, a benzo-crown ring, a dibenzo-crown ring or a dicyclohexano-crown ring, particularly preferably is a cyclodextrin ring or a crown ether ring, and most preferably is a cyclodextrin ring. Further, the cyclodextrin ring includes an α-form (ring inner diameter: 0.45 to 0.6 nm), a β-form (ring inner diameter: 0.6 to 0.8 nm) and a γ-form (ring inner diameter: 0.8 to 0.95 nm), and an α-cyclodextrin ring and a β-cyclodextrin ring are preferable, and an α-cyclodextrin ring is most preferable. Assuming that a trapping number when all the cyclic molecules are threaded through the molecular axle is 1, the trapping number of the cyclic molecules is preferably in the range of 0.001 to 0.6, more preferably in the range of 0.002 to 0.5, and most preferably in the range of 0.003 to 0.4.

The radically polymerizable group is preferably a (meth)acryloyl group in consideration of reactivity with another polymerizable monomer. The number of radically polymerizable groups is also not particularly limited, and is preferably 0 to 5,000 in one molecule.

Polyrotaxanes having (meth)acryloyl groups as described above are disclosed in International Publication WO 2018/030257.

### <Silsesquioxane Radically Polymerizable Compound>

The silsesquioxane radically polymerizable compound has various molecular structures such as a cage shape, a ladder shape, and a random shape, and has a radically polymerizable group such as a (meth)acrylic group, etc.

Examples of such a silsesquioxane polymerizable compound include those represented by the following formula (8): 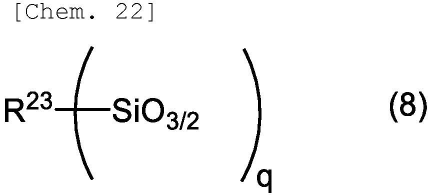 wherein, in formula (8), q is a degree of polymerization and is an integer of 3 to 100.

A plurality of R²³ may be the same as or different from each other, and are a radically polymerizable group, an organic group containing a radically polymerizable group, a hydrogen atom, an alkyl group, a cycloalkyl group, an alkoxy group, or a phenyl group. At least one R²³ among the plurality of R²³ is a radically polymerizable group or an organic group containing a radically polymerizable group.

Here, examples of the radically polymerizable group represented by R²³ or the organic group containing a radically polymerizable group include: a (meth)acrylic group; an organic group having a (meth)acrylic group, such as a (meth)acryloyloxypropyl group, a (3-(meth)acryloyloxypropyl)dimethylsiloxy group, etc.; an allyl group; an organic group having an allyl group such as an allylpropyl group or an allylpropyldimethylsiloxy group, etc.; a vinyl group; an organic group having a vinyl group such as a vinylpropyl group, a vinyldimethylsiloxy group, etc.

### <Allyl-based Polymerizable Compound>

Examples of the allyl-based polymerizable compound having an allyl group include the following compounds: diethylene glycol bisallyl carbonate, methoxypolyethylene glycol allyl ether, methoxypolyethylene glycol-polypropylene glycol allyl ether, butoxypolyethylene glycol-polypropylene glycol allyl ether, phenoxypolyethylene glycol allyl ether, vinyloxypolyethylene glycol allyl ether, styryloxypolyethylene glycol allyl ether, and methoxypolyethylenethioglycol allyl thioether.

### <Vinyl-based Polymerizable Compound>

Examples of the vinyl-based polymerizable compound having a vinyl group include methyl vinyl ketone, ethyl vinyl ketone, ethyl vinyl ether, styrene, vinyl cyclohexane, butadiene, 1,4-pentadiene, divinyl sulfide, divinyl sulfone, 1,2-divinylbenzene, 1,3-divinyl-1,1,3,3-tetramethylpropanedisiloxane, diethylene glycol divinyl ether, divinyl adipate, divinyl sebacate, ethylene glycol divinyl ether, divinyl sulfoxide, divinyl persulfide, dimethyldivinylsilane, 1,2,4-trivinylcyclohexane, methyltrivinylsilane, α-methylstyrene, α-methylstyrene dimer, etc.

### <Blending Proportion in Curable Composition>

In the curable composition according to the embodiment, the proportion of the first radically polymerizable monomer is 15% by mass or more and 34% by mass or less. When this proportion is high, the cured product tends to have enhanced performance of the functional dye. This proportion may be 16% by mass or more, preferably 17% by mass or more, more preferably 19% by mass or more, still more preferably 20% by mass or more, and particularly preferably 21% by mass or more. On the other hand, when this proportion is excessively high, adhesion tends to decrease. This proportion may be preferably 33% by mass or less, and more preferably 32% by mass or less.

The curable composition according to the embodiment preferably includes the second radically polymerizable monomer from the viewpoint of increasing the hardness of the cured product. The proportion of the second radically polymerizable monomer is preferably 1% by mass or more, more preferably 10% by mass or more, still more preferably 20% by mass or more, and particularly preferably 25% by mass or more. On the other hand, when this proportion is excessively high, the performance of the functional dye of the cured product tends to decrease, and the appearance tends to decrease. This proportion is preferably 85% by mass or less, more preferably 50% by mass or less, and still more preferably 35% by mass or less.

The curable composition according to the embodiment preferably contains the third radically polymerizable monomer from the viewpoint of enhancing adhesion of the cured product. The proportion of the third radically polymerizable monomer is preferably 0.1% by mass or more, more preferably 1% by mass or more, and still more preferably 3% by mass or more. On the other hand, when this proportion is excessively high, the performance of the functional dye of the cured product tends to decrease. This proportion is preferably 20% by mass or less, more preferably 10% by mass or less, and still more preferably 7% by mass or less.

From the viewpoint of enhancing adhesion of the cured product, the curable composition according to the embodiment preferably includes a third radically polymerizable monomer. A proportion of the third radically polymerizable monomer is preferably 0.1% by mass or more, more preferably 1% by mass or more, and still more preferably 3% by mass or more. On the other hand, when this proportion is excessively high, the performance of the functional dye of the cured product tends to decrease. This proportion is preferably 20% by mass or less, more preferably 10% by mass or less, and still more preferably 7% by mass or less.

In the curable composition according to the embodiment, a content of di(meth)acrylate other than the first radically polymerizable monomer is preferably 70% by mass or less. That is, when the content of di(meth)acrylate such as (meth)acrylate having an alkylene oxide chain having 2 or less carbon atoms, polyalkylene carbonate polyol di(meth)acrylate, etc. is large, the performance of the functional dye of the cured product may decrease. The content of the di(meth)acrylate other than the first radically polymerizable monomer may be 60% by mass or less, 55% by mass or less, 30% by mass or less, or 20% by mass or less. The lower limit of this content is 0% by mass in one example, and 5% by mass or more in another example. In particular, among di(meth)acrylates other than the first radically polymerizable monomer, (poly)ethylene glycol di(meth)acrylate is preferably used in combination with the first radically polymerizable monomer from the viewpoint of improving compatibility between the first radically polymerizable monomer and the primer layer and further being able to improve appearance and adhesion of the laminate. In consideration of fulfillment of both the hardness of the cured product and the performance of the functional dye, the content thereof is preferably 60% by mass or less. The content of (poly)ethylene glycol di(meth)acrylate may be 30% by mass or less, 20% by mass or less, or 10% by mass. The content of (poly)ethylene glycol di(meth)acrylate may be 55% by mass or less, or 50% by mass or less. The lower limit of this content is 0% by mass in one example, and 5% by mass or more in another example.

The curable composition containing the first to third radically polymerizable monomers may have the first radically polymerizable monomer in a content of 15% by mass or more and 34% by mass or less, the second radically polymerizable monomer in a content of 10% by mass or more and 85% by mass or less, the third radically polymerizable monomer in a content of 1% by mass or more and 10% by mass or less, and the functional dye and an additive(s) as a balance.

The curable composition according to the embodiment preferably contains methacrylate in a proportion of 50% by mass or more. A higher proportion of this functional dye tends to result in a cured product with enhanced functionality. This proportion is preferably 60% by mass or more, more preferably 70% by mass or more, and still more preferably 90% by mass or more. The upper limit of this proportion is 99% by mass or less in one example, and 95% by mass or less in another example.

In the curable composition according to the embodiment, a ratio M10/M11, where M10 is a mass of methacrylate and M11 is a mass of acrylate, may be 0.1 or more and 10 or less, may be 0.5 or more and 5 or less, and may be 1.2 or more and 6 or less.

A ratio M1/M3, where M1 is a mass of the first radically polymerizable monomer and M3 is a mass of the second radically polymerizable monomer, is preferably 0.1 or more and 20 or less. When a curable composition having the ratio M1/M3 within this range is used, the cured product tends to have enhanced performance of the functional dye and higher hardness. The ratio M1/M3 is more preferably 0.5 or more and 10 or less, and further preferably 1 or more and 5 or less.

A ratio M1/M4, where M1 is a mass of the first radically polymerizable monomer and M4 is a mass of the third radically polymerizable monomer, is preferably 0.1 or more and 50 or less. When a curable composition having the ratio M1/M3 within this range is used, the cured product tends to have enhanced performance of the functional dye and higher hardness. The ratio M1/M3 is more preferably 1 or more and 30 or less, and further preferably 5 or more and 15 or less.

When an amount of the component (A) is 100 parts by mass, an amount of the component (A-1) may be 15 to 34 parts by mass, 16 to 33 parts by mass, 17 to 34 parts by mass, or 17 to 33 parts by mass.

In a case in which the component (A-2) is blended, an amount of the component (A-2) may be 1 to 570 parts by mass, 1 to 300 parts by mass, 3 to 300 parts by mass, or 5 to 250 parts by mass based on 100 parts by mass of the component (A-1) .

Further, when the component (A-3) is contained, the component (A-3) may be contained in an amount of 0.01 to 500 parts by mass, 0.1 to 450 parts by mass, or 0.5 to 430 parts by mass based on 100 parts by mass of the component (A).

### <Functional Dye (B)>

The functional dye includes a compound having selectively absorbing ability of visible light and a compound which develops, fades, or changes color by energy such as light, heat, an electric field, or pressure. Such a functional dye may exhibit a specific function by structural changes under specific conditions. The functional dye includes, for example, at least one selected from the group consisting of a photochromic compound, an ultraviolet absorber, a blue light absorber, an infrared absorber, and an electrochromic compound.

When M1 is the mass of the first radically polymerizable monomer and M2 is a mass of the functional dye, a ratio M1/M2 is 10 or more and 10,000 or less, for example. This ratio M1/M2 is preferably 15 or more and 1,000 or less, and more preferably 20 or more and 100 or less.

A content of the functional dye in the curable composition is, for example, 0.01% by mass or more and 10% by mass or less. The content of the functional dye is preferably 0.1% by mass or more and 8% by mass or less, and more preferably 1% by mass or more and 5% by mass or less.

### <Photochromic Compound>

The photochromic compound is used in an amount to obtain a desired photochromic property. The photochromic compound is preferably used in an amount of 0.01 to 10 parts by mass with respect to 100 parts by mass of the component (A).

This blending amount is preferably adjusted according to the application to be used.

Specifically, when the curable composition containing the photochromic compound is formed into a thin film such as a coating, for example, a thin film of about 100 µm thickness (a polymer film obtained by polymerizing a photochromic curable composition), color tone is preferably adjusted by blending 0.1 to 10 parts by mass of the photochromic compound with respect to 100 parts by mass of the polymerizable compound.

In the case of forming a thick cured product (a polymer molded product obtained by polymerizing a photochromic curable composition), for example, in the case of forming a cured product having a thickness of 1 mm or more, it is preferable to adjust the color tone by blending 0.01 to 1 part by mass of the photochromic compound with respect to 100 parts by mass of the thick cured product or 100 parts by mass of a polymerizable compound that yields the thick cured product.

As the photochromic compound, a known compound can be used without any limitation, and these can be used alone or in combination of two or more types thereof. Typical examples of such photochromic compounds include a chromene compound, a fulgide compound, a fulgimide compound, and a spirooxazine compound, which are disclosed in many documents such as Japanese Patent Application, Publication No. H2-28154, Japanese Patent Application, Publication No. S62-288830, and International Publication Nos. WO 94/22850, WO 96/14596, WO 2022/075330, and WO 2022/168989, etc.

Among these photochromic compounds, a chromene compound and a spirooxazine compound are preferably used. A chromene compound is particularly preferable. The chromene compound includes a compound having a 1-benzopyran skeleton, a spiropyran compound having a spiropyran skeleton, and a naphthopyran compound having a naphthopyran skeleton.

The naphthopyran compound preferably contains a compound represented by the following formula (9), the following formula (10), the following formula (11), the following formula (12), the following formula (13), and the following formula (14).

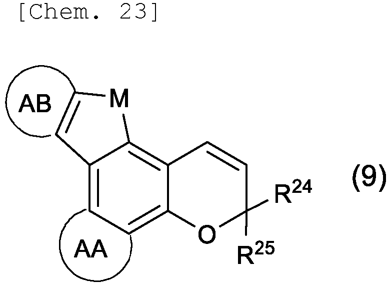

In the formula (9), the ring AA is a substituted or unsubstituted aromatic hydrocarbon ring, a substituted or unsubstituted aromatic heterocycle, or a substituted or unsubstituted condensed polycyclic ring in which these rings are condensed with an aromatic ring or an aromatic heterocycle. The ring AA may be absent.

The ring AB is a substituted or unsubstituted aromatic hydrocarbon ring, a substituted or unsubstituted aromatic heterocycle, or a substituted or unsubstituted condensed polycyclic ring in which these rings are condensed with an aromatic ring or an aromatic heterocycle.

R²⁴ and R²⁵ each independently are a hydrogen atom or a substituent, and two or more substituents may be bonded to each other to form a ring structure.

Examples of the substituent include a hydroxygroup, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group which may have a substituent, an aralkoxy group which may have a substituent, an aryloxy group which may have a substituent, an alkylthio group, an arylthio group which may have a substituent, an aryl group which may have a substituent, an amino group, a substituted amino group, and a heterocyclic group which may have a substituent. At least one selected from the group consisting of a haloalkylthio group, a cycloalkylthio group which may have a substituent, an oligomer group, and a group represented by the following formula (15) is preferable.

-Q¹-(P¹Q²)ₐₐ-P²Q³ (15)

Q¹ is an alkylene group which may include a halogen atom as a substituent. Q² is an alkylene group which may include a halogen atom as a substituent. Q³ is an alkyl group which may include a halogen atom as a substituent. P¹ and P² each independently are O, S, NR⁷⁰⁰, PR⁷⁰¹, or P(=O). R⁷⁰⁰ is a hydrogen atom, an alkyl group which may have a substituent, a cycloalkyl group which may have a substituent, an aryl group which may have a substituent, or a heteroaryl group which may have a substituent. R⁷⁰¹ is a hydrogen atom, an alkyl group which may have a substituent, a cycloalkyl group which may have a substituent, an aryl group which may have a substituent, or a heteroaryl group which may have a substituent.
aa is 0, or 1 or more and 10 or less.

M is CR²⁶R²⁷, SiR²⁶R²⁷, GeR²⁶R²⁷, or NR²⁶. R²⁶ and R²⁷ each independently are a hydrogen atom or a substituent, and two or more substituents may be bonded to each other to form a ring structure.

As the substituent, at least one selected from the following group is preferable: the group consisting a hydroxygroup, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group which may have a substituent, an aralkoxy group which may have a substituent, an aryloxy group which may have a substituent, an alkylthio group, an arylthio group which may have a substituent, an aryl group which may have a substituent, an amino group, a substituted amino group, a heterocyclic group which may have a substituent, and a group represented by the formula (15).

When two of R²⁶ and R²⁷ are combined to form a ring structure, it is preferable to form an aliphatic ring having 3 to 20 ring-member carbon atoms, a condensed polycyclic ring in which an aromatic ring or an aromatic heterocycle is condensed to an aliphatic ring, a heterocycle having 3 to 20 ring-member atoms, or a condensed polycyclic ring in which an aromatic ring or an aromatic heterocycle is condensed to a heterocycle.

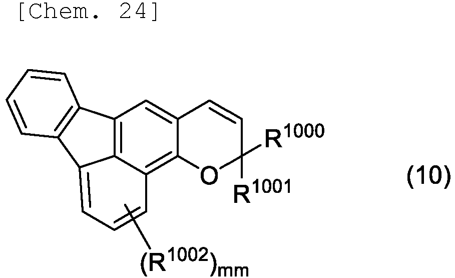

In formula (10), R¹⁰⁰⁰, R¹⁰⁰¹ and R¹⁰⁰² each independently represent a hydrogen atom or a substituent, and two or more substituents may combine to form a ring structure. As the substituent, the same substituents as those described with regard to the formula (9) may be used.
mm is an integer of 1 to 10.

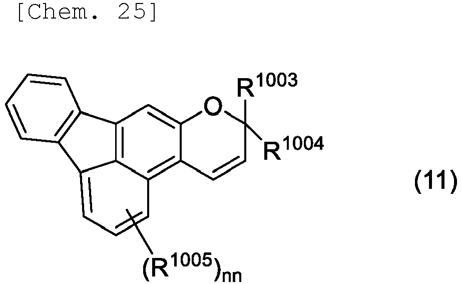

In the formula (11), R¹⁰⁰³, R¹⁰⁰⁴, and R¹⁰⁰⁵ each independently are a hydrogen atom or a substituent, and two or more substituents may be bonded to each other to form a ring structure. As the substituent, the same substituents as those described with regard to the formula (9) may be used.
nn is an integer of 1 to 10.

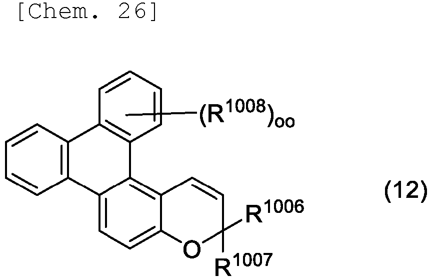

In formula (12), R¹⁰⁰⁶, R¹⁰⁰⁷, and R¹⁰⁰⁸ each independently are a hydrogen atom or a substituent, and two or more substituents may be bonded to each other to form a ring structure. As the substituent, the same substituents as those described with regard to the formula (9) may be used.
oo is an integer of 1 to 12.

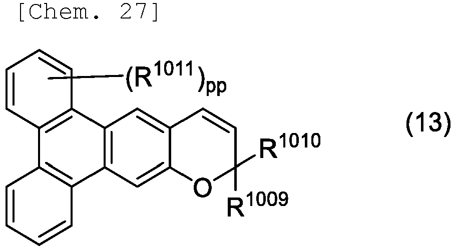

In formula (13), R¹⁰⁰⁹, R¹⁰¹⁰ and R¹⁰¹¹ each independently are a hydrogen atom or a substituent, and two or more substituents may be bonded to each other to form a ring structure. As the substituent, the same substituents as those described with regard to the formula (9) may be used.
pp is an integer of 1 to 12.

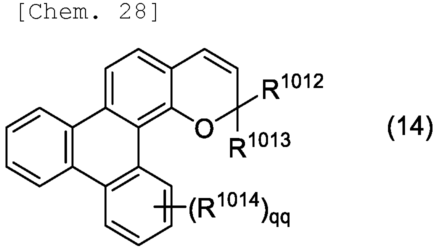

In formula (14), R¹⁰¹², R¹⁰¹³, and R¹⁰¹⁴ each independently are a hydrogen atom or a substituent, and two or more substituents may be bonded to each other to form a ring structure. As the substituent, the same substituents as those described with regard to the formula (9) may be used.
qq is an integer of 1 to 12.

The naphthopyran compound includes an indenonaphthopyran compound having an indenonaphthopyran skeleton. The indenonaphthopyran compound preferably has an indeno[2,1-f]naphtho[1,2-b]pyran skeleton.

As the indeno[2,1-f]naphtho[1,2-b]pyran, compounds described, for example, in the following documents can be used without any limitation: International Publication Nos. WO1996/014596, WO2001/019813, WO2001/060811, WO2005/028465, WO2006/110221, WO2007/073462, WO2007/140071, WO2008/054942, WO2010/065393, WO2011/10744, WO2011/016582, WO2011/025056, WO2011/034202, WO2011/078030, WO2012/102409, WO2012/102410, WO2012/121414 or the like.

In addition to the above, a photochromic compound having an oligomer chain group in the molecule can also be suitably used. Photochromic compounds having such oligomeric chain groups are disclosed in many documents such as International Publication Nos. WO2000/015630, WO2004/041961, WO2009/146509, WO2012/149599, WO2012/162725, WO2013/078086, WO2019/013249, WO2019/203205 or the like. Among these photochromic compounds having an oligomer chain group in the molecule, photochromic compounds having an oligomer chain group described in International Publication Nos. WO2019/013249 and WO2019/203205 are preferably used, because a more excellent photochromic property and durability are exhibited.

The indenonaphthopyran compound preferably contains a compound represented by the following formula (16): 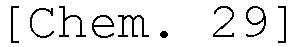 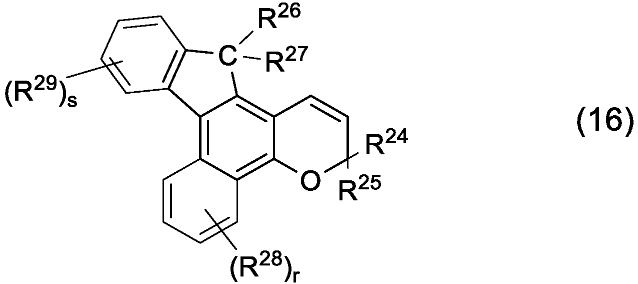
wherein R²⁴, R²⁵, R²⁶ and R²⁷ are as defined above.
r is an integer of 0 to 4.
s is an integer of 0 to 4. When r is 2 to 4, a plurality of R²⁸ may be the same or different from each other. When s is 2 to 4, a plurality of R²⁹ may be the same or different from each other. In the case where r is 2 to 4 and adjacent R²⁸ groups are present, two adjacent R²⁸ groups may form a ring together with a carbon atom to which the two adjacent R²⁸ bond. The ring may contain at least one heteroatom selected from the group consisting of an oxygen atom, a carbon atom, a sulfur atom, and a nitrogen atom and may further have a substituent. In the case where s is 2 to 4 and adjacent R²⁹ groups are present, two adjacent R²⁹ groups may form a ring together with a carbon atom to which the two adjacent R²⁹ groups bond. The ring may contain at least one heteroatom selected from the group consisting of an oxygen atom, a carbon atom, a sulfur atom, and a nitrogen atom and may further have a substituent.

R²⁸ and R²⁹ each independently are a group represented by the formula (15), a hydroxy group, an alkyl group, a haloalkyl group, a cycloalkyl group which may have a substituent, an alkoxy group, an amino group, a substituted amino group, a heterocyclic group which may have a substituent, a cyano group, a halogen atom, an alkylthio group, an arylthio group which may have a substituent, a nitro group, a formyl group, a hydroxycarbonyl group, an alkylcarbonyl group, an alkoxycarbonyl group, an optionally substituted aralkyl group, an aralkoxy group which may have a substituent, an aryloxy group which may have a substituent, an aryl group which may have a substituent, a heteroaryl group which may have a substituent, a thiol group, an alkoxyalkylthio group, a haloalkylthio group, a cycloalkylthio group which may have a substituent, a silyl group which may have a substituent, an oxysilyl group which may have a substituent, a group represented by the following formula (17), or a group represented by L-R⁴⁰⁰.

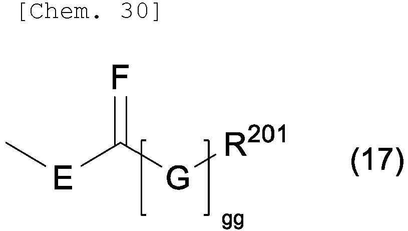

E is an oxygen atom or NR¹⁰¹, and R¹⁰¹ is a hydrogen atom or an alkyl group. F is an oxygen atom or a sulfur atom. G is an oxygen atom, a sulfur atom or NR²⁰². R²⁰² is a hydrogen atom, an alkyl group, a cycloalkyl group, an aryl group, or a heteroaryl group. gg is an integer of 0 or 1. R²⁰¹ is a hydrogen atom, an alkyl group, a cycloalkyl group, an aryl group, or a heteroaryl group. When G is an oxygen atom or a sulfur atom, R²⁰¹ is a group other than a hydrogen atom.

R⁴⁰⁰ is a hydrogen atom, an alkyl group, an aryl group, a silyl group having a substituent, a polymerization group, or a photochromic group. The substituent of the silyl group is an alkyl group, an alkoxyl group, or an aryl group. L is a group represented by the following formula (18).

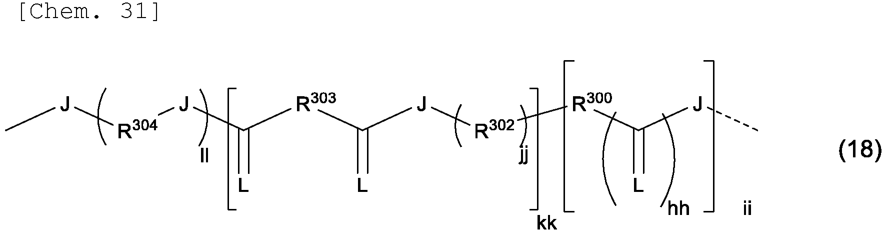

J groups are divalent groups, and each independently are a direct bond, a substituted methylene group, an oxygen atom, a sulfur atom, or NR³⁰¹. R³⁰¹ is a hydrogen atom or an alkyl group. In the formula (18), L is an oxygen atom or a sulfur atom. R³⁰⁰ is an alkylene group or a silylene group having an alkyl group or an aryl group as a substituent. R³⁰², R³⁰³ and R³⁰⁴ are alkylene groups. hh, jj, kk, and ll are 0 or 1. ii is an integer from 1 to 200. The plural ii units may be the same or different. The dashed line represents a bond to R⁴⁰⁰.

### <Other Additives>

The curable composition contains the component (A) and a component (B) described above, as essential components. Various known compounding agents can be blended in the curable composition within a range where the effect is not impaired. The compounding agent includes, for example, various stabilizers such as a release agent, an ultraviolet absorber, an infrared absorber, an ultraviolet stabilizer, an antioxidant, an anti-coloring agent, an antistatic agent, a fluorescent dye, a dye, a pigment, a fragrance, etc. Solvents and leveling agents can also be blended. Thiols such as **t-**dodecylmercaptan, etc. can be blended as a polymerization regulator.

### <Ultraviolet Stabilizers>

When an ultraviolet stabilizer is mixed and used, the durability of the photochromic compound can be further improved, and thus blending of an ultraviolet stabilizer is preferable. As the ultraviolet stabilizer, a hindered amine light stabilizer, a hindered phenol antioxidant, or a sulfurbased antioxidant can be suitably used. The hindered amine light stabilizer is not particularly limited, but bis(1,2,2,6,6-pentamethyl-4-piperidyl)sebacate is particularly preferable from the viewpoint of preventing deterioration of the photochromic compound. Hindered amine-based light stabilizers commercially available under the trade names of Adekastab LA-52, LA-57, LA-62, LA-63, LA-67, LA-77, LA-87, and the like from ADEKA Corporation can also be suitably used.

A hindered phenol antioxidant is preferable from the viewpoint of preventing deterioration of the photochromic compound. For example, the following can be exemplified: 2,6-di-t-butyl-4-methyl-phenol, IRGANOX 245 manufactured by BASF Japan Ltd: ethylenebis(oxyethylene)bis[3,5-tert-butyl-4-hydroxy-m-toluyl]propionate], IRGANOX1076 manufactured by BASF Japan Ltd.: octadecyl-3-(3,5-di-tert-butyl-4-hydroxyphenyl)propionate, IRGANOX 1010 manufactured by BASF Japan Ltd: pentaerythritol tetrakis[3-(3,5-di-tert-butyl-4-hydroxyphenyl)propionate], IRGANOXes 1035, 1075, 1098, 1135, 1141, 1222, 1330, 1425, 1520, 259, 3114, 3790, 5057 and 565 manufactured by BASF Japan, or the like. A used amount of such an ultraviolet stabilizer is not particularly limited as long as the effect is not impaired, but is usually in the range of 0.001 to 10 parts by mass, particularly 0.01 to 1 part by mass, per 100 parts by mass of the curable composition.

### <Polymerization Initiators>

The polymerization initiator includes a thermal polymerization initiator and a photopolymerization initiator, and examples thereof are as follows.

Examples of the thermal polymerization initiator include diacyl peroxide: benzoyl peroxide, p-chlorobenzoyl peroxide, decanoyl peroxide, lauroyl peroxide, and acetyl peroxide, peroxyesters: t-butylperoxy-2-ethylhexanate, t-butylperoxyneodecanate, cumylperoxyneodecanate, and t-butylperoxybenzoate,
percarbonate: diisopropylperoxydicarbonate and di-sec-butylperoxydicarbonate,
azo compounds: azobisisobutyronitrile
and the like.

Examples of the photopolymerization initiator include the following:
acetophenone-based compounds: 1-phenyl-2-hydroxy-2-methylpropan-1-one, 1-hydroxycyclohexylphenyl ketone, and 1-(4-isopropylphenyl)-2-hydroxy-2-methylpropan-1-one, an α-dicarbonyl-based compound: 1,2-diphenylethanedione and methylphenylglycoxylate,
acylphosphine oxide-based compounds: 2,6-dimethylbenzoyldiphenylphosphine oxide, 2,4,6-trimethylbenzoyldiphenylphosphine oxide, methyl 2,4,6-trimethylbenzoyldiphenylphosphinate, 2,6-dichlorobenzoyldiphenylphosphine oxide, and 2,6-dimethoxybenzoyldiphenylphosphine oxide,
and the like.

When a photopolymerization initiator is used, a known polymerization curing accelerator such as tertiary amine may be used in combination.

### <Surfactants>

When a surfactant is added, wettability to an optical substrate and/or a primer layer can be improved, and occurrence of poor appearance can be prevented. Examples of the surfactant include known surfactants such as a silicone surfactant having a silicone chain (polyalkylsiloxane unit) as a hydrophobic group and a fluorine surfactant having a fluorocarbon chain. When a surfactant is used, two or more types thereof may be mixed and used. Furthermore, the surfactant may be a surfactant that can be polymerized with the component (A) or a surfactant that cannot be polymerized.

Examples of suitable silicone surfactants and fluorosurfactants include L-7001, L-7002, L-7604, FZ-2123, FZ-2110 manufactured by Dow Toray Co., Ltd., MEGAFACE F-470, MEGAFACE F-1405, MEGAFACE F-479 manufactured by DIC Corporation, Fluorad FC-430 manufactured by 3M Japan, TEGORAD2100 and TEGORAD2300, manufactured by Evonik Industries, BYK-UV3505, BYK-UV3505, BYK-UV3510, BYK-UV3530, BYK-3550, BYK-3560, BYK-UV3565, BYK-3566, BYK-UV3500, BYK-UV3535, BYK-UV3570, BYK-UV3575, and BYK-UV3576 manufactured by BYK Japan, KR-513, X-22-2445, X-40-9296, X-22-164, X-22-164A, X-22-164B, X-22-164C and X-22-164E manufactured by Shin-Etsu Chemical Co., Ltd., and the like.

### <Ultraviolet Absorbers>

As the ultraviolet absorber, known ultraviolet absorbers such as a benzophenone-based compound, a benzotriazole-based compound, a cyanoacrylate-based compound, a triazine-based compound, a benzoate-based compound, a cinnamate ester-based compound, an oxanilide-based compound, etc. can be used. Particularly, a cyanoacrylate-based compound, a benzophenone-based compound, a benzotriazole-based compound, and a cinnamate ester-based compound are preferable. The ultraviolet stabilizer is preferably used in an amount of 0.001 to 5 parts by mass with respect to 100 parts by mass of the curable composition containing a photochromic compound and a polymerizable compound.

### <Cured Products>

The cured product is obtained by curing the curable composition. Curing of the curable composition is performed by causing a radical polymerization reaction by radiation of active energy rays such as ultraviolet rays, α rays, β rays, γ rays, LED, etc., heat, or a combination of both. That is, an appropriate curing means may be employed depending on the type of the polymerizable monomer and/or polymerization curing accelerator to be used and the form of the cured product to be formed. When a laminate is formed by a coating method to be described later, photopolymerization is preferably employed because a uniform film thickness can be obtained.

When a curable composition containing a polymerizable compound is thermally polymerized, thermal polymerization temperature affects properties of a cured product. This temperature condition is affected by the type and amount of the thermal polymerization initiator and the type of the polymerizable compound, and thus cannot uniformly be limited, but in general, a method in which polymerization is started at a relatively low temperature and the temperature is slowly increased is preferable. Since the polymerization time also varies depending on various factors as well as temperature, it is preferable to determine the optimum time beforehand depending on these conditions. It is generally preferable to select the conditions so that the polymerization is completed in 2 to 48 hours. In the case of obtaining a photochromic laminated sheet, it is preferable to perform polymerization at a temperature at which a reaction between polymerizable functional groups proceeds, and at this time, an optimum temperature and time are determined so as to obtain a desired molecular weight.

When a curable composition is photopolymerized, UV intensity, among the polymerization conditions, particularly affects the properties of the resulting photochromic cured product. This illuminance condition is affected by the type and amount of the photopolymerization initiator and the type of the polymerizable monomer, and thus cannot be uniformly limited, but it is generally preferable to select a condition in which UV light of 50 to 500 mW/cm² is radiated in a time of 0.5 to 5 minutes at a wavelength of 365 nm.

Biomass plasticity of the cured product is preferably 10% by mass or more. The biomass plasticity can be calculated by a method according to ISO 16620-3. The biomass plasticity of the cured product is preferably 25% by mass or more, more preferably 30% by mass or more, and still more preferably 40% by mass or more. The upper limit of this biomass plasticity is not particularly limited but is 100% by mass or less in one example and 80% by mass or less in another example.

### <Laminates>

According to another embodiment, a laminate is provided. The laminate includes an optical substrate and a cured product that is according to the embodiment and is located on a surface of the optical substrate. The optical substrate includes a resin such as, for example, a diallyl carbonate resin, a urethane resin, a thiourethane resin, etc. The optical substrate may be a lens substrate. A primer layer may be provided between the laminate and the cured product. The primer layer includes a urethane resin. The laminate according to the embodiment preferably includes an optical substrate including an allyl-based resin.

Biomass plasticity of the optical substrate is preferably 25% by mass or more. The biomass plasticity can be calculated by a method according to ISO 16620-3. The biomass plasticity of the optical substrate is preferably 30% by mass or more, and more preferably 40% by mass or more. The upper limit of the biomass plasticity is not particularly limited but is 100% by mass or less in one example and 80% by mass or less in another example.

FIG. 1 is a cross-sectional view schematically showing an example of a laminate according to the embodiment. Laminate 10 shown in FIG. 1 includes an optical substrate 11, a primer layer 1 provided on one main surface of the optical substrate 11, and a functional resin layer 12 provided on a main surface of the primer layer 1. The functional resin layer 12 includes the cured product according to the embodiment. The optical substrate 11 is a convex meniscus lens having a convex-concave shape.

### <Optical Articles>

The cured product according to the embodiment can be widely used as an optical article and can be used, for example, as various memory materials such as various memory materials replacing a silver salt photosensitive material, a copying material, a photoreceptor for printing, a memory material for a cathode ray tube, a photosensitive material for laser, and a photosensitive material for holography, and a lens. The lens is suitable for eyeglasses. A photochromic cured product containing a photochromic compound can also be used as a photochromic lens material, an optical filter material, a display material, and a material for a photometer, a decoration, etc.

The cured product according to the embodiment is particularly suitable for use in photochromic lenses. The photochromic lens is suitable as eyeglass lenses of sunglasses, etc. As a method for producing the photochromic lens, a known method can be employed as long as uniform light control performance can be obtained.

In the case of expressing a photochromic property by a kneading method, by injecting the above-described curable composition between glass molds held by an elastomer gasket or a spacer, and heating the curable composition in an air furnace or irradiating it with active energy rays such as ultraviolet rays to perform cast polymerization, depending on the type of the polymerizable compound and/or polymerization curing accelerator, it is possible to obtain a photochromic cured product molded into a form of an optical material.

In the case of expressing a photochromic property by a lamination method, by appropriately dissolving a curable composition in an organic solvent to prepare a coating solution, applying the coating solution to a surface of an optical substrate such as a lens substrate by spin coating or dipping, drying to remove the organic solvent, and then irradiating the curable composition with UV or heating it in an inert gas such as nitrogen to perform polymerization curing, a photochromic layer composed of a photochromic cured product can be formed on the surface of the optical substrate (coating method).

In addition, a photochromic layer composed of a photochromic cured product can also be formed on a surface of an optical substrate by casting polymerization using an inner mold, in which an optical substrate such as a lens substrate is disposed so as to face a glass mold so that a predetermined gap is formed, a curable composition is injected into the gap, and polymerization curing is performed by UV irradiation, heating, or the like in this state (casting polymerization method) .

When the photochromic layer is formed on a surface of an optical substrate by the lamination method (coating method and casting polymerization method) as described above, adhesion between the photochromic layer and the optical substrate can also be enhanced by previously performing a chemical treatment with an alkali solution, an acid solution, or the like, or a physical treatment with corona discharge, plasma discharge, polishing, or the like on the surface of the optical substrate. Of course, it is also possible to provide a transparent adhesive resin layer on the surface of the optical substrate.

The cured product formed of the curable composition may be subjected to post-processing depending on its use. Examples of the post-processing include dyeing by using a dye such as a disperse dye, laminating a protective layer containing a urethane resin, an epoxy resin, or the like, forming a hard coat film by using a silane coupling agent or a hard coat agent containing a sol of silicon, zirconium, antimony, aluminum, tin, tungsten, or the like as a main component, forming a thin film by vapor deposition of a metal oxide such as SiO₂, TiO₂, or ZrO₂, performing an antireflection treatment or an antistatic treatment by using a thin film obtained by applying an organic polymer or the like.

### EXAMPLES

Next, the present invention will be described in detail with reference to Examples and Comparative Examples, but the present invention is not limited to these Examples. The notation, evaluation method, and the like of each component are as follows.

### <Components>

### Component (A)

### Component (A-1)

M-PPG: dimethacrylate of the following formula: 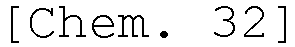 3 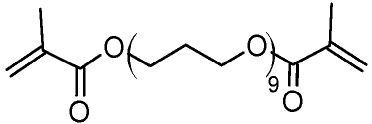
M-PTMG65: polytetramethylene glycol dimethacrylate (average molecular weight: 786, c=9)
M-PTMG65Bio: polytetramethylene glycol dimethacrylate (average molecular weight: 803, c=9, degree of biomass: 76.8% by mass) synthesized using polytetramethylene glycol having a degree of biomass of 95% by mass
M-PTMG85: polytetramethylene glycol dimethacrylate (average molecular weight: 986, c=11.8)
M-PTMG100: polytetramethylene glycol dimethacrylate (average molecular weight: 1136, c=13.9)
M-PTMG100: polytetramethylene glycol diacrylate (average molecular weight: 1456, c=17.8)
M-PTMG100Bio: polytetramethylene glycol dimethacrylate (average molecular weight: 1171, c=14.1, degree of biomass:
   82.5% by mass) synthesized by using polytetramethylene glycol having a degree of biomass of 95% by mass
   M-EGTMG160: dimethacrylate of the following formula: 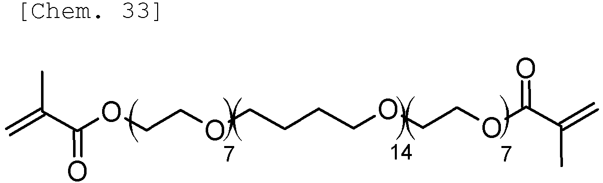
      M-EGTMG130: dimethacrylate of the following formula: 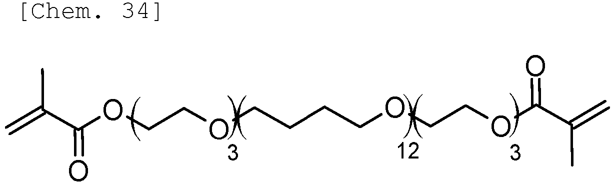
      M-EGTMG110: dimethacrylate of the following formula: 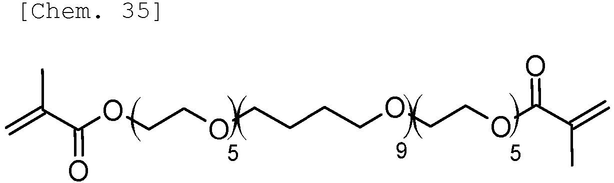
   (A-2)
      TMPT: trimethylolpropane trimethacrylate
      D-TMP: ditrimethylolpropane tetramethacrylate
      A-TMMT: pentaerythritol tetraacrylate
      M-TMMT: pentaerythritol tetramethacrylate
      A-TMMT-43: mixture of pentaerythritol
      triacrylate:pentaerythritol tetraacrylate = 57:43 (weight ratio)
      M-TMMT-80: mixture of pentaerythritol
      trimethacrylate:pentaerythritol tetramethacrylate = 18:82 (weight ratio) mixture
      A-DPEHA: dipentaerythritol hexaacrylate
   (A-3)
      9G: polyethylene glycol dimethacrylate (average molecular weight: 550)
      14G: polyethylene glycol dimethacrylate (average molecular weight: 770)
      APC56: dimethacrylate form (average molecular weight: 606) of polycarbonate diol obtained by phosgenation of pentamethylene glycol and hexamethylene glycol
      MPCD56: dimethacrylate form (average molecular weight 634) of polycarbonate diol obtained by phosgenation of pentamethylene glycol and hexamethylene glycol
      M-GDM: glycerin dimethacrylate
      M-NEO: neopentyl glycol dimethacrylate
      LA82: 1,2,2,6,6-pentamethyl-4-piperidyl methacrylate
      TSL: γ-methacryloyloxypropyltrimethoxysilane
      M-PTMG200: polytetramethylene glycol dimethacrylate (average molecular weight: 2209, c=28.5)

### (Another Radically Polymerizable Monomer)

### RX-1: polyrotaxane having an acryloyl group

A polyrotaxane having an acryloyl group satisfying the following properties was synthesized according to the method described in International Publication No. WO 2018/030257. Weight average molecular weight Mw (GPC) of polyrotaxane (RX-1) having an acryloyl group: 180,000. Modification proportion of acryloyl group in side chain: 80 mol%. Proportion of OH groups remaining in the side chain; 20 mol%. Molecular axle: linear polyethylene glycol (PEG) with a molecular weight of 11,000. Trapping ring: α-cyclodextrin (α-CD) introduction proportion: 0.25. Termini of the molecular axle: sealed with adamantane. Side chains threaded through the trapping rings: (average) molecular weight of the side chains was about 500. Number of acryloyl groups per molecule: about 90.

The weight average molecular weight Mw of polyrotaxane (RX-1) was measured by gel permeation chromatography (GPC method). As an apparatus, a liquid chromatography apparatus (manufactured by Nihon Waters) was used. As a column, two columns of TSKgel SuperHM-M (exclusion limit molecular weight: 4,000,000, manufactured by Tosoh) were used in series.

Tetrahydrofuran was used as a developing solution, and the measurement was performed under the conditions of a flow rate of 0.6 ml/min and a temperature of 40°C. By determination of the weight average molecular weight by means of comparative conversion, using polystyrene as a standard sample, the weight average molecular weight of RX-1 was found to be 180,000.

SO-1: silsesquioxane having a methacryloyl group and having the following properties:
Number of methacrylate groups per molecule: 20
Weight average molecular weight: 4,800. SO-1 was synthesized by the following method. First, 248 ml of ethanol and 54 g (3.0 mol) of water were added to 248 g (1.0 mol) of 3-trimethoxysilylpropyl methacrylate and 0.20 g (0.005 mol) of sodium hydroxide was added as a catalyst, followed by reaction at 30°C for 3 hours. After disappearance of the starting material was checked by ¹H-NMR, the reaction mixture was neutralized with dilute hydrochloric acid, 174 ml of toluene, 174 ml of heptane, and 174 g of water were added, and an aqueous layer was removed. Thereafter, the organic layer was washed with water until the aqueous layer became neutral, and the solvent was concentrated to obtain SO-1. Note that ²⁹Si-NMR confirmed that SO-1 was a mixture of a cage-like structure, a ladder-like structure, and a random structure. A weight average molecular weight Mw of SO-1 was measured by gel permeation chromatography (GPC method). As an apparatus, a liquid chromatography apparatus (manufactured by Nihon Waters) was used. Three columns of Shodex GPC KF-802 (exclusion limit molecular weight: 5,000, manufactured by Showa Denko), Shodex GPC KF802.5 (exclusion limit molecular weight: 20,000, manufactured by Showa Denko) and Shodex GPC KF-803 (exclusion limit molecular weight: 70,000, manufactured by Showa Denko) were used in series. In addition, tetrahydrofuran was used as a developing solution, and the measurement was performed under the conditions of a flow rate of 1 ml/min and a temperature of 40°C. Polystyrene was used as a standard sample, and the weight average molecular weight was determined by comparison conversion.

### Component (B)

PC1: a compound represented by the following formula:

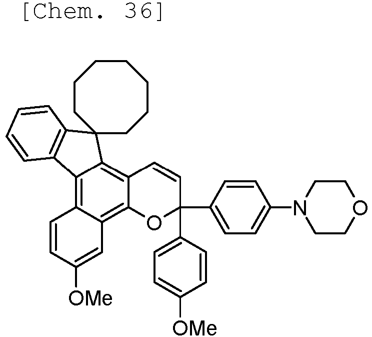

PC2: a compound represented by the following formula:

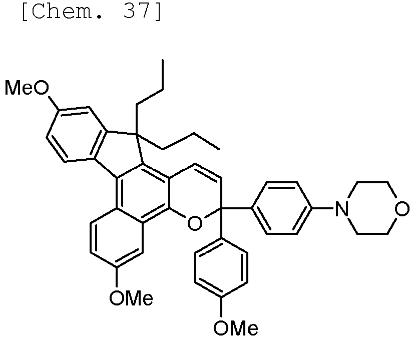

PC3: a compound represented by the following formula:

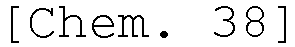

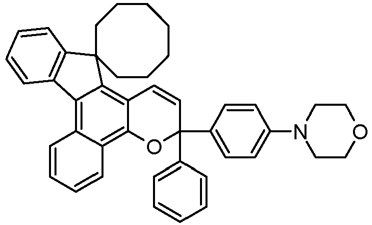

PC4: a compound represented by the following formula:

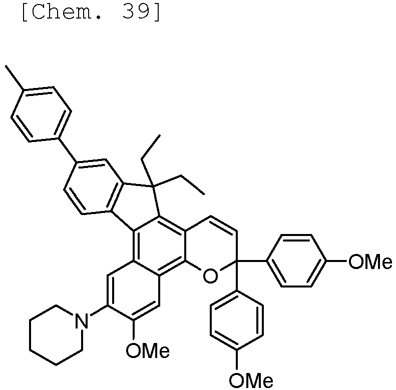

PC5: a compound represented by the following formula:

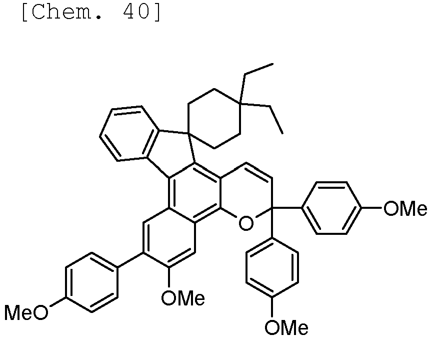

PC6: a compound represented by the following formula:

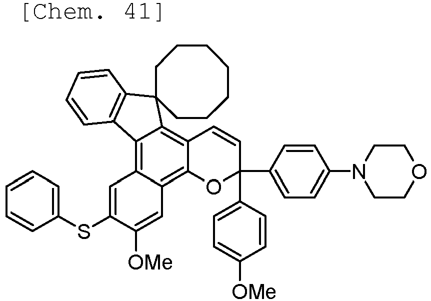

PC7: a compound represented by the following formula:

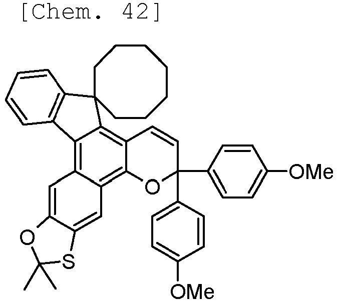

### (Another Compounding Agent)

### (Stabilizer)

HALS: bis(1,2,2,6,6-pentamethyl-4-piperidyl)sebacate
HP: ethylene bis(oxyethylene)bis[3-(5-tert-butyl-4-hydroxy-m-tolyl)propionate] (Irganox 245 manufactured by BASF Japan).

### (Photopolymerization Initiator)

PI: phenylbis(2,4,6-trimethylbenzoyl)-phosphine oxide (Omnirad 819 manufactured by IGM).

### Example 1

### (Production of Photochromic Curable Compositions)

First, each component was prepared according to the following formula.

### Component (A)

Component (A-1): 31.5 parts by mass of M-PTMG65
Component (A-2): 62.9 parts by mass of TMPT
Component (A-3): 5.6 parts by mass of TSL
Component (B): 1.6 parts by mass of PC1

### (Other Compounding Agents)

### (Polymerization initiator): 0.3 parts by mass of PI

### (Stabilizer): 1 part by mass of HP

### 31 parts by mass of HALS

Next, after all the compounds corresponding to the component (A) were mixed, to the obtained mixture, the component (B) and the other additives were further mixed to obtain a mixture. To the resulting mixture, 1,000 ppm of a leveling agent L7001 manufactured by Dow Toray was added and mixed to obtain a photochromic curable composition.

### (Production of Optical Article)

By using this photochromic curable composition, a photochromic laminate was obtained by the lamination method in which polymerization was performed as follows.

First, a thiourethane-based plastic lens having a center thickness of 2 mm and a refractive index of 1.60 was prepared as an optical substrate. This thiourethane-based plastic lens was previously subjected to alkali etching at 50°C for 5 minutes by using a 5% sodium hydroxide aqueous solution, followed by sufficient washing with distilled water.

A moisture-curable primer (product name: TR-SC-P, manufactured by Tokuyama) was coated on the surface of the plastic lens using a spin coater (1H-DX2, manufactured by MIKASA) at 70 rpm for 15 seconds and then at 700 rpm for 10 seconds. Thereafter, about 1 g of the photochromic curable composition obtained above was spin-coated so that the film thickness of the photochromic coating layer was 40 µm.

The lens thus coated with the photochromic curable composition (photochromic coating layer) was irradiated with light for 90 seconds using a metal halide lamp having an output of 200 mW/cm² in a nitrogen gas atmosphere to cure the coating film. Thereafter, the resulting lens was further heated at 90°C for 1 hour to prepare a photochromic laminate having a photochromic layer. Evaluation was performed according to the following evaluation methods, and the results are shown in Table 5.

### <Evaluation Method>

The resulting photochromic laminate was evaluated by the following method.

### (1) Photochromic Property

### [1] Maximum Absorption Wavelength (λmax):

A maximum absorption wavelength after color development was obtained by using a spectrophotometer manufactured by Otsuka Electronics (instantaneous multichannel photodetector MCPD 3000) and was used as an index of color tone at the time of color development.

### [2] Color Developing Density at 23°C (A₂₃):

The color developing density at 23°C refers to a difference between an absorbance {ε(240)} after irradiation with light at 23°C for 240 seconds at the above-mentioned maximum absorption wavelength and an absorbance ε(0) when not irradiated with light and is used as an index for the color developing density. The higher the value is, the better the photochromic property is.

### [3] Fading Half-Life at 23°C [τ1/2 (sec.)]:

This is a period of time taken by an absorbance at the above-mentioned maximum absorption wavelength of a sample to decrease to 1/2 of {ε(300)-ε(0)} when irradiation is stopped after irradiation with light at 23°C for 300 seconds, and was used as an index of the fading rate. The shorter this period of time is, the faster the fading rate is.

### (2) Vickers Hardness

Vickers hardness was measured using Micro Vickers Hardness Tester PMT-X7A (manufactured by Matsuzawa Co., Ltd.). A quadrangular pyramidal diamond indenter was used as an indenter, and measurement was performed under the conditions of a load of 10 gf and a holding time of the indenter of 30 seconds. The measurement was performed four times in total and the measurement result was shown as an average value of three times in total, excluding the first value having a large measurement error.

### (3) Crack Evaluation

20 photochromic laminates were prepared, the presence or absence of cracking was visually checked, and the cracking was evaluated according to the following criteria. A: No cracks were observed in all 20 photochromic laminates. B: A crack was observed in one photochromic laminate of the 20 photochromic laminates. C: A crack was observed in 1 to 3 or more photochromic laminates of the 20 photochromic laminates. D: A crack was observed in a part of the surface in 5 or more photochromic laminates of the 20 photochromic laminates.

### (4) Appearance Evaluation

Using an allyl-based plastic lens having a center thickness of 2 mm and a refractive index of 1.50 as an optical substrate, an optical article having a photochromic laminate stacked on an optical substrate was prepared in the same manner as described above. Light from a fluorescent lamp laminate was passed through an obtained photochromic laminate in a black box, and appearance thereof was evaluated according to the following criteria. A: no white turbidity was observed. B: white turbidity was seen only slightly. C: slightly turbid. D: turbid.

### (5) Adhesion Evaluation

(4) The optical article obtained in the appearance evaluation was immersed in boiling distilled water and boiled for 5 hours. Adhesion was evaluated before boiling, 3 hours after boiling, and 5 hours after boiling. The adhesion was measured by a cross-cut tape test with reference to the method of Japanese Industrial Standards JIS D-0202. That is, using a cutter knife, cuts were made at intervals of 1 mm on the surface of the obtained photochromic optical article to form 25 squares. A cellophane adhesive tape (cellotape (registered trademark) manufactured by Nichiban) was firmly attached thereto, and then was peeled off from the surface at a time in a direction of 60°, and then the number and state of cells in which the photochromic laminate remained were visually checked and evaluated according to the following criteria. A: no peeling. B: the peeling position is limited to the intersection of the cuts, and the number of peeled sections is less than 5 squares. C: the peeling position is not limited to only the intersection of the cuts, but also includes partial or extensive peeling of the photochromic laminate along the cut edges, and the number of peeled sections is less than 5 squares. D: the peeling position is not limited to only the intersection of the cuts, but also includes partial or extensive peeling of the photochromic laminate along the cut edges, and the number of peeled sections is less than 10 squares. E: the peeling position is not limited to only the intersection of the cuts, but also includes partial or extensive peeling of the photochromic laminate along the cut edges, and the number of peeled sections is 10 squares or more.

Examples 2 to 24 and Comparative Examples 1 to 8 Photochromic cured products were prepared in the same manner as in Example 1 except that the photochromic curable compositions described in Tables 1 to 5 were used, and evaluations were performed according to the same evaluation items. The results are shown in Tables 6 to 8.

### [Table 1]

**Table 1**

| | Component A | | | | Component B (blending amount) | Additive (blending amount) |
|---|---|---|---|---|---|---|
| | Component A-1 (blending amount) | A-2 (blending amount) | A-3 (blending amount) | Others | | |
| Example 1 | M-PTMG65(17.5) | TMPT(76.9) | TSL(5.6) | - | PC1(1.6) | HALS (3) |
| | | | | | | HP (1) |
| | | | | | | PI (0.3) |
| Example 2 | M-PTMG100(21.0) | TMPT(73.4) | TSL(5.6) | - | PC1(1.6) | HALS (3) |
| | | | | | | HP (1) |
| | | | | | | PI (0.3) |
| Example 3 | M-EGTMG110(19.0) | TMPT (71.9) | TSL(5.6) | | PC1(1.6) | HALS (3) |
| | M-PTMG100Bio(3.5) | | | | | HP (1) |
| | | | | | | PI (0.3) |
| Example 4 | M-PTMG65(25.0) | TMPT (69. 4) | TSL(5.6) | - | PC1(1.6) | HALS (3) |
| | | | | | | HP (1) |
| | | | | | | PI (0.3) |
| Example 5 | M-PTMG65(31.5) | TMPT(62.9) | TSL(5.6) | - | PC1(1.6) | HALS (3) |
| | | | | | | HP (1) |
| | | | | | | PI (0.3) |
| Example 6 | M-PTMG65(31.5) | D-TMP(62.9) | TSL(5.6) | - | PC1(1.6) | HALS (3) |
| | | | | | | HP (1) |
| | | | | | | PI (0.3) |
| Example 7 | M-PTMG65(31.5) | M-TMMT(62.9) | TSL(5.6) | - | PC1(1.6) | HALS (3) |
| | | | | | | HP (1) |
| | | | | | | PI (0.3) |
| Comparative Example 1 | M-PTMG65 (15.1) | TMPT (79.2) | TSL(5.6) | - | PC1(1.6) | HALS (3) |
| | | | | | | HP (1) |
| | | | | | | PI (0.3) |
| Comparative Example 2 | M-PTMG65(38.5) | TMPT (55.9) | TSL(5.6) | - | PC1(1.6) | HALS (3) |
| | | | | | | HP (1) |
| | | | | | | PI (0.3) |

### [Table 2]

**Table 2**

| | Component A | | | | Component B (blending amount) | Additive (blending amount) |
|---|---|---|---|---|---|---|
| | Component A-1 (blending amount) | A-2 (blending amount) | A-3 (blending amount) | Others | | |
| Example 8 | M-PTMG65(35.1) | D-TMP(39.1) | TSL(5.6) | - | PC1(1.6) | HALS (3) |
| | | | | | | HP (1) |
| | | M-TMMT (20.2) | | | | PI (0.3) |
| Example 9 | M-PTMG100 (35.1) | D-TMP(39.1) | TSL(5.6) | - | PC1(1.6) | HALS (3) |
| | | | | | | HP (1) |
| | | M-TMMT (20.2) | | | | PI (0.3) |
| Example 10 | M-PTMG100 (25.0) | A-TMMT (34.6) | TSL(5.6) | - | PC1(1.6) | HALS (3) |
| | | | | | | HP (1) |
| | | M-TMMT-80 (34.7) | | | | PI (0.3) |
| Comparative Example 3 | - | D-TMP(39.1) | M-PTMG200 (35.1) | - | PC1(1.6) | HALS (3) |
| | | | | | | HP (1) |
| | | M-TMMT (20.2) | TSL(5.6) | | | PI (0.3) |
| Comparative Example 4 | - | D-TMP(39.1) | 14G(35.1) | - | PC1(1.6) | HALS (3) |
| | | | | | | HP (1) |
| | | M-TMMT (20.2) | TSL(5.6) | | | PI (0.3) |

### [Table 3]

**Table 3**

| | Component A | | | | Component B (blending amount) | Additive (blending amount) |
|---|---|---|---|---|---|---|
| | Component A-1 (blending amount) | A-2 (blending amount) | A-3 (blending amount) | Others | | |
| Example 11 | M-PTMG65(24.5) | TMPT (15.1) | 14G(54.8) | | PC1(1.6) | HALS (3) |
| | | | TSL(5.6) | | | HP (1) |
| | | | | | | PI (0.3) |
| Example 12 | M-PTMG65(31.5) | TMPT (15.1) | 14G(47.8) | - | PC1(1.6) | HALS (3) |
| | | | TSL(5.6) | | | HP (1) |
| | | | | | | PI (0.3) |
| Example 13 | M-PTMG65(28.5) | TMPT(37.5) | 14G(28.4) | - | PC4(1.8) | HALS (3) |
| | | | TSL(5.6) | | | HP (1) |
| | | | | | | PI (0.3) |
| Example 14 | M-PTMG65Bio(28.5) | TMPT(37.5) | 14G(28.4) | - | PC4(1.8) | HALS (3) |
| | | | TSL(5.6) | | | HP (1) |
| | | | | | | PI (0.3) |
| Example 15 | M-PPG(28.5) | TMPT(37.5) | 14G(28.4) | - | PC4(1.8) | HALS (3) |
| | | | TSL(5.6) | | | HP (1) |
| | | | | | | PI (0.3) |
| Example 16 | M-PTMG85 (28.5) | TMPT(37.5) | 14G(28.4) | - | PC4(1.8) | HALS (3) |
| | | | TSL(5.6) | | | HP (1) |
| | | | | | | PI (0.3) |
| Example 17 | M-PTMG100(28.5) | TMPT(37.5) | 14G(28.4) | - | PC4(1.8) | HALS (3) |
| | | | TSL(5.6) | | | HP (1) |
| | | | | | | PI (0.3) |
| Example 18 | M-PTMG100Bio(28.5) | TMPT(37.5) | 14G(28.4) | - | PC4(1.8) | HALS (3) |
| | | | TSL(5.6) | | | HP (1) |
| | | | | | | PI (0.3) |
| Example 19 | M-EGTMG110(28.5) | TMPT (37. 5) | 14G(28.4) | - | PC4(1.8) | HALS (3) |
| | | | TSL(5.6) | | | HP (1) |
| | | | | | | PI (0.3) |
| Example 20 | M-PTMG130(28.5) | TMPT(37.5) | 14G(28.4) | - | PC4(1.8) | HALS (3) |
| | | | TSL(5.6) | | | HP (1) |
| | | | | | | PI (0.3) |
| Example 21 | M-EGTMG160(28.5) | TMPT (37. 5) | 14G(28.5) | - | PC4(1.8) | HALS (3) |
| | | | TSL(5.5) | | | HP (1) |
| | | | | | | PI (0.3) |
| Comparative Example 5 | - | TMPT(37.5) | 14G(56.9) | - | PC4(1.8) | HALS (3) |
| | | | TSL(5.6) | | | HP (1) |
| | | | | | | PI (0.3) |

### [Table 4]

**Table 4**

| | Component A | | | | Component B (blending amount) | Additive (blending amount) |
|---|---|---|---|---|---|---|
| | Component A-1 (blending amount) | A-2 (blending amount) | A-3 (blending amount) | Others | | |
| Example 22 | M-PTMG65 (26.5) | A-TMM-43(19.0) | 14G(23.3) | - | PC1(1.6) | HALS (3) |
| | | | M-NEO(3.6) | | | |
| | | TMPT(17.6) | APC56(5.0) | | | HP(1) |
| | | | TSL(5.6) | | | PI (0.3) |
| Example 23 | M-PTMG85(28.3) | D-TMP(19.8) | 9G(8.0) | RX-1(2.2) | PC1(1.6) | HALS (3) |
| | | | 14G(32.0) | | | |
| | | | M-GDM(4.0) | | | HP(1) |
| | | | TSL(5.6) | | | PI (0.3) |
| Example 24 | M-PTMG100Bio(28.6) | M-TMMT(37.7) | 14G(23.0) | - | PC1(1.6) | HALS (3) |
| | | | MPCD56 (5.0) | | | HP(1) |
| | | | TSL(5.6) | | | PI (0.3) |
| Example 25 | M-PTMG65 (33.0) | M-TMMT(31.6) | 14G(19.8) | - | PC1(1.6) | HALS (3) |
| | | A-TMMT(10.0) | TSL(5.6) | | | HP(1) |
| | | | | | | PI (0.3) |
| Example 26 | M-PTMG130(22.0) | TMPT (18.0) | 14G(20.0) | SO-1(1.5) | PC1(1.6) | HALS (1) |
| | M-EGTMG130(10.0) | M-TMMT(20.0) | LA-82(2.9) | | | HP (1) |
| | | | TSL(5.6) | | | PI (0.3) |
| Example 27 | M-PTMG130(22.0) | | 14G(20.0) | SO-1(1.5) | PC2(1.6) | HALS (1) |
| | M-EGTMG130(10.5) | TMPT (18.2) M-TMMT(20.3) | LA-82(2.9) | | | HP (1) |
| | | | TSL(5.6) | | | PI (0.3) |
| Example 28 | M-PTMG130(22.0) | TMPT (18.2) | 14G(20.0) | SO-1(1.5) | PC3 (0.30) | HALS (1) |
| | | | | | PC5(0.20) | |
| | M-EGTMG130(10.5) | M-TMMT(20.3) | LA-82(2.9) | | PC6 (2.20) | HP (1) |
| | | | TSL(5.6) | | PC7 (0.80) | PI (0.3) |

### [Table 5]

**Table 5**

| | Photochromic property | | | Vickers hardness | Crack evaluation | Appearance | Boiling adhesion(1.50) | |
|---|---|---|---|---|---|---|---|---|
| | Maximum absorption wavelength (nm) | Color developing density at 23°C(-) | Fading half-life at 23°C (second) | | | Turbid | 3 hours boiling | 5 hours boiling |
| Example 1 | 582 | 0.93 | 67 | 9.8 | A | B | A | A |
| Example 2 | 581 | 0.93 | 57 | 9.6 | A | A | A | A |
| Example 3 | 582 | 0.93 | 54 | 9.5 | A | A | A | A |
| Example 4 | 581 | 0.93 | 61 | 9.5 | A | A | A | A |
| Example 5 | 581 | 0.93 | 59 | 8.7 | A | A | A | A |
| Example 6 | 581 | 0.92 | 57 | 8.5 | A | A | A | A |
| Example 7 | 581 | 0.92 | 56 | 8.9 | A | A | A | A |
| Comparative Example 1 | 582 | 0.92 | 69 | 10.5 | C | D | A | A |
| Comparative Example 2 | 582 | 0.92 | 52 | 6.3 | A | A | A | c |

### [Table 6]

**Table 6**

| | Photochromic property | | | Vickers hardness | Crack evaluation | Appearance | Boiling adhesion (1.50) | |
|---|---|---|---|---|---|---|---|---|
| | Maximum absorption wavelength (nm) | Color developing density at 23°C(-) | Fading half-life at 23°C (second) | | | Turbid | 3 hours boiling | 5 hours boiling |
| Example 8 | 582 | 0.93 | 53 | 7.0 | A | A | A | A |
| Example 9 | 581 | 0.93 | 47 | 6.7 | A | A | A | A |
| Example 10 | 581 | 0.90 | 52 | 8.8 | A | A | A | A |
| Comparative Example 3 | 580 | 0.94 | 43 | 6.1 | A | A | B | C |
| Comparative Example 4 | 586 | 0.92 | 72 | 7.5 | A | A | A | A |

### [Table 7]

**Table 7**

| | Photochromic property | | | Vickers hardness | Crack evaluation | Appearance | Boiling adhesion (1.50) | |
|---|---|---|---|---|---|---|---|---|
| | Maximum absorption wavelength (nm) | Color developing density at 23°C(-) | Fading half-life at 23°C (second) | | | Turbid | 3 hours boiling | 5 hours boiling |
| Example 11 | 584 | 0.93 | 54 | 2.2 | A | A | A | A |
| Example 12 | 583 | 0.93 | 51 | 2.2 | A | A | A | A |
| Example 13 | 475 | 1.73 | 110 | 5.4 | A | A | A | A |
| | 571 | 0.84 | 110 | | | | | |
| Example 14 | 474 | 1.72 | 109 | 5.4 | A | A | A | A |
| | 571 | 0.84 | 109 | | | | | |
| Example 15 | 477 | 1.73 | 115 | 5.5 | A | A | A | A |
| | 572 | 0.84 | 115 | | | | | |
| Example 16 | 475 | 1.73 | 104 | 5.3 | A | A | A | A |
| | 570 | 0.85 | 104 | | | | | |
| Example 17 | 474 | 1.73 | 100 | 5.1 | A | A | A | A |
| | 571 | 0.85 | 100 | | | | | |
| Example 18 | 474 | 1.73 | 100 | 5.1 | A | A | A | A |
| | 572 | 0.85 | 100 | | | | | |
| Example 19 | 476 | 1.72 | 97 | 5.0 | A | A | A | A |
| | 571 | 0.85 | 97 | | | | | |
| Example 20 | 474 | 1.73 | 98 | 4.9 | A | A | A | A |
| | 570 | 0.85 | 98 | | | | | |
| Example 21 | 472 | 1.74 | 95 | 4.6 | A | A | A | A |
| | 571 | 0.86 | 95 | | | | | |
| Comparative Example 5 | 478 | 1.69 | 135 | 5. 6 | A | A | A | A |
| | 571 | 0.83 | 135 | | | | | |

### [Table 8]

**Table 8**

| | Photochromic property | | | Vickers hardness | Crack evaluation | Appearance | Boiling adhesion (1.50) | |
|---|---|---|---|---|---|---|---|---|
| | Maximum absorption wavelength (nm) | Color developing density at 23°C(-) | Fading half-life at 23°C (second) | | | Turbid | 3 hours boiling | 5 hours boiling |
| Example 22 | 582 | 0.90 | 53 | 5.5 | A | A | A | A |
| Example 23 | 583 | 0.93 | 53 | 3.5 | A | A | A | A |
| Example 24 | 582 | 0.92 | 49 | 5.1 | A | A | A | A |
| Example 25 | 582 | 0.94 | 55 | 5.7 | A | A | A | A |
| Example 26 | 582 | 0.92 | 49 | 4.6 | A | A | A | A |
| Example 27 | 603 | 1.09 | 57 | 4.6 | A | A | A | A |
| Example 28 | 467 | 0.93 | 55 | 4.6 | A | A | A | A |
| | 581 | 1.02 | 55 | | | | | |

As is clear from Tables 6 and 7, it can be seen that in comparison between Examples and Comparative Examples where the same photochromic compounds were used, the curable composition including the first radically polymerizable monomer represented by the formula (1) of the present invention had an excellent photochromic property, particularly an excellent fading rate. It can also be seen that by setting the content of the first polymerizable monomer to an arbitrary content, the photochromic laminate can have excellent appearance and adhesion.

Hereinafter, preferred embodiments of the present invention are described as additional statements.
[1] A curable composition including a first radically polymerizable monomer represented by the following formula (1) and a functional dye:
   in which a content of the first radically polymerizable monomer is 15% by mass or more and 34% by mass or less: 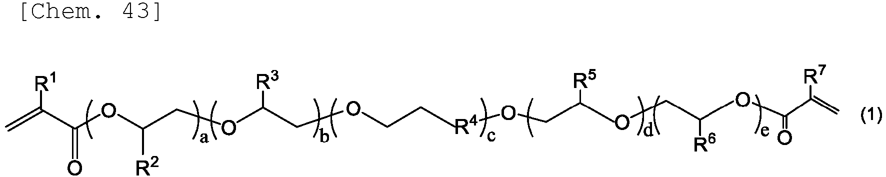 in which,
   R¹ is a hydrogen atom or a methyl group,
   R² is a hydrogen atom or an alkyl group having 1 to 3 carbon atoms,
   R³ is a hydrogen atom or an alkyl group having 1 to 3 carbon atoms,
   R⁴ is a linear or branched alkylene group having 1 to 7 carbon atoms which may have a substituent,
   R⁵ is a hydrogen atom or an alkyl group having 1 to 3 carbon atoms,
   R⁶ is a hydrogen atom or an alkyl group having 1 to 3 carbon atoms,
   R⁷ is a hydrogen atom or a methyl group,
   a is 0 to 10,
   b is 0 to 20,
   c is 2 to 20 and is a number greater than each of a, b, d, and e,
   d is 0 to 20, and
   e is 0 to 10.
[2]
   The curable composition as described in [1], in which a ratio M1/M2 is 10 or more and 10,000 or less, the ratio M1/M2 being a ratio of a mass M1 of the first radically polymerizable monomer and a mass M2 of the functional dye.
[3]
   The curable composition as described in [1] or [2], in which a content of the first radically polymerizable monomer is 17% by mass or more and 32% by mass or less.
[4]
   The curable composition as described in any one of [1] to [3], in which a content of the functional dye is 0.01% by mass or more and 10% by mass or less.
[5]
   The curable composition as described in any one of [1] to [4], further including a second radically polymerizable monomer having three or more (meth)acryloyl groups in one molecule.
[6]
   The curable composition as described in [5], in which the second radically polymerizable monomer includes a polyfunctional (meth)acrylate represented by the following formula (I): 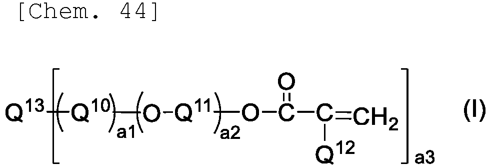 in which
   Q¹⁰ is a methylene group,
   Q¹¹ is a linear or branched alkylene group having 1 to 3 carbon atoms,
   Q¹² is a hydrogen atom or a methyl group,
   Q¹³ is a trivalent to hexavalent organic group having 1 to 10 carbon atoms,
   a1 is 0 or 1,
   a2 is 0, 1, 2, or 3, and
   a3 is 3, 4, 5, or 6.
[7]
   The curable composition as described in [5] or [6], in which a content of the second radically polymerizable monomer is 1% by mass or more and 85% by mass or less.
[8]
   The curable composition as described in any one of [5] to [7], in which a ratio M1/M3 is 0.1 or more and 20 or less, the ratio M1/M3 being a ratio of a mass M1 of the first radically polymerizable monomer and a mass M3 of the second radically polymerizable monomer.
[9]
   The curable composition as described in any one of [1] to [8], in which the first radically polymerizable monomer includes a bifunctional (meth)acrylate represented by the following formula (3): 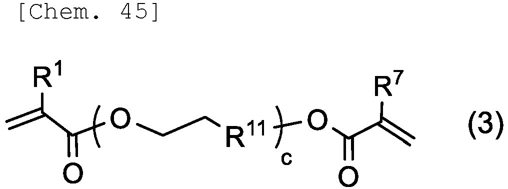 in which,
   R¹, R⁷, and c are as defined in the formula (1), and
   R¹¹ is a linear alkylene group having 1 to 7 carbon atoms.
[10]
   The curable composition as described in any one of [1] to [9], in which a number average molecular weight of the first radically polymerizable monomer is 200 or more and 2,000 or less.
[11]
   The curable composition as described in any one of [1] to [10], in which the functional dye includes at least one compound selected from the group consisting of a chromene compound and a spirooxazine compound.
[12]
   The curable composition as described in any one of [1] to [11], further including a third radically polymerizable monomer having one (meth)acryloyl group in one molecule.
[13]
   The curable composition as described in [12], in which a content of the third radically polymerizable monomer is 0.1% by mass or more and 20% by mass or less.
[14]
   The curable composition as described in [12] or [13], in which ratio M1/M4 is 0.1 or more and 50 or less, the ratio M1/M4 being a ratio of a mass M1 of the first radically polymerizable monomer and a mass M4 of the third radically polymerizable monomer.
[15]
   The curable composition as described in any one of [1] to [14], in which a content of (poly)ethylene glycol di(meth)acrylate is 60% by mass or less.
[16]
   A cured product obtained by curing the curable composition as described in any one of [1] to [15].
[17]
   A laminate including:
   an optical substrate; and
   the cured product as described in [16],
   in which the cured product is located on a surface of the optical substrate.
[18]
   A laminate including:
   an optical substrate,
   a primer layer including a urethane resin, the primer layer covering at least a part of a surface of the optical substrate, and
   the cured product as described in [16] that covers at least a part of the primer layer.
[19]
   A lens including:
   a lens substrate; and
   the cured product as described in [16], in which the cured product is located on a surface of the lens substrate.
[20]
   Eyeglasses including the lens as described in [19].
[21]
   The cured product as described in [16], having biomass plasticity of 10% by mass or more, as determined by a method in accordance with ISO standard 16620-3.
[22]
   The laminate as described in [17] or [18], in which the optical substrate has biomass plasticity of 25% by mass or more as determined by a method in accordance with ISO standard 16620-3.

## Claims

1. A curable composition comprising a first radically polymerizable monomer represented by the following formula (1) and a functional dye:
wherein a content of the first radically polymerizable monomer is 15% by mass or more and 34% by mass or less: 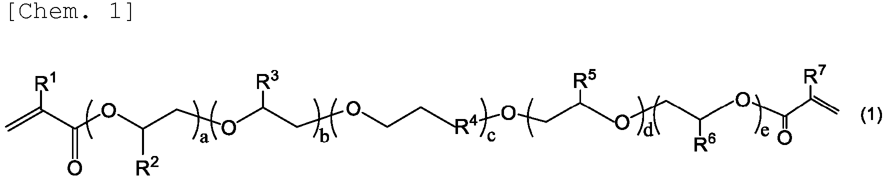
wherein
R¹ is a hydrogen atom or a methyl group,
R² is a hydrogen atom or an alkyl group having 1 to 3 carbon atoms,
R³ is a hydrogen atom or an alkyl group having 1 to 3 carbon atoms,
R⁴ is a linear or branched alkylene group having 1 to 7 carbon atoms which may have a substituent,
R⁵ is a hydrogen atom or an alkyl group having 1 to 3 carbon atoms,
R⁶ is a hydrogen atom or an alkyl group having 1 to 3 carbon atoms,
R⁷ is a hydrogen atom or a methyl group,
a is 0 to 10,
b is 0 to 20,
c is 2 to 20 and is a number greater than each of a, b, d, and e,
d is 0 to 20, and
e is 0 to 10.

2. The curable composition according to claim 1, wherein a ratio M1/M2 is 10 or more and 10,000 or less, the ratio M1/M2 being a ratio of a mass M1 of the first radically polymerizable monomer and a mass M2 of the functional dye.

3. The curable composition according to claim 1, wherein a content of the first radically polymerizable monomer is 17% by mass or more and 32% by mass or less.

4. The curable composition according to claim 1, wherein a content of the functional dye is 0.01% by mass or more and 10% by mass or less.

5. The curable composition according to claim 1, further comprising a second radically polymerizable monomer having three or more (meth)acryloyl groups in one molecule.

6. The curable composition according to claim 5, wherein the second radically polymerizable monomer comprises a polyfunctional (meth)acrylate represented by the following formula (I): 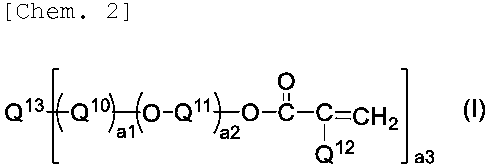 wherein
Q¹⁰ is a methylene group,
Q¹¹ is a linear or branched alkylene group having 1 to 3 carbon atoms,
Q¹² is a hydrogen atom or a methyl group,
Q¹³ is a trivalent to hexavalent organic group having 1 to 10 carbon atoms,
a1 is 0 or 1,
a2 is 0, 1, 2, or 3, and
a3 is 3, 4, 5, or 6.

7. The curable composition according to claim 5, wherein a content of the second radically polymerizable monomer is 1% by mass or more and 85% by mass or less.

8. The curable composition according to claim 5, wherein a ratio M1/M3 is 0.1 or more and 20 or less, the ratio M1/M3 being a ratio of a mass M1 of the first radically polymerizable monomer and a mass M3 of the second radically polymerizable monomer.

9. The curable composition according to claim 1, wherein the first radically polymerizable monomer comprises a bifunctional (meth)acrylate represented by the following formula (3): 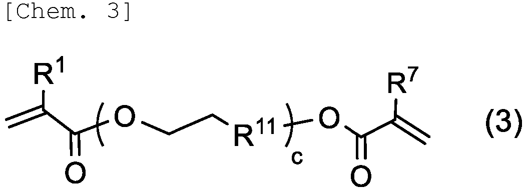 wherein
R¹, R⁷, and c are as defined in the formula (1), and
R¹¹ is a linear alkylene group having 1 to 7 carbon atoms.

10. The curable composition according to claim 1, wherein a number average molecular weight of the first radically polymerizable monomer is 200 or more and 2,000 or less.

11. The curable composition according to claim 1, wherein the functional dye comprises at least one compound selected from the group consisting of a chromene compound and a spirooxazine compound.

12. The curable composition according to claim 1, further comprising a third radically polymerizable monomer having one (meth)acryloyl group in one molecule.

13. The curable composition according to claim 12, wherein a content of the third radically polymerizable monomer is 0.1% by mass or more and 20% by mass or less.

14. The curable composition according to claim 12, wherein a ratio M1/M4 is 0.1 or more and 50 or less, the ratio M1/M4 being a ratio of a mass M1 of the first radically polymerizable monomer and a mass M4 of the third radically polymerizable monomer.

15. The curable composition according to claim 1, wherein a content of (poly)ethylene glycol di(meth)acrylate is 60% by mass or less.

16. A cured product obtained by curing the curable composition according to claim 1.

17. A laminate comprising:
an optical substrate; and
the cured product according to claim 16,
wherein the cured product is located on a surface of the optical substrate.

18. A laminate comprising:
an optical substrate,
a primer layer comprising a urethane resin, the primer layer covering at least a part of a surface of the optical substrate and,
the cured product according to claim 16 that covers at least a part of the primer layer.

19. A lens comprising:
a lens substrate; and
the cured product according to claim 16,
wherein the cured product is located on a surface of the lens substrate.

20. Eyeglasses comprising the lens according to claim 19.

21. The cured product according to claim 16, having biomass plasticity of 10% by mass or more, as determined by a method in accordance with ISO standard 16620-3.

22. The laminate according to claim 17 or 18, wherein the optical substrate has biomass plasticity of 25% by mass or more, as determined by a method in accordance with ISO standard 16620-3.
